(19) Europäisches Patentamt
European Patent Office
Office européen des brevets

(11) EP 1 361 245 A1

(12) **EUROPEAN PATENT APPLICATION**

(43) Date of publication:
**12.11.2003 Bulletin 2003/46**

(21) Application number: **02447081.7**

(22) Date of filing: **03.05.2002**

(51) Int Cl.[7]: **C08G 77/388**, C08G 77/26, C08L 83/08, C09D 163/00, C09D 183/08

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **SigmaKalon Group B.V.**
**1422 AD Uithoorn (NL)**

(72) Inventors:
- **Mill, Sibel**
  **1470 Bousval (BE)**
- **Slingeneijer de Goeswin, Christophe**
  **7350 Hensies (BE)**
- **de Jong, Jan**
  **1503 VC Zaandam (NL)**
- **Gillard, Michel**
  **1348 Louvain-la-Neuve (BE)**

(74) Representative:
**Brants, Johan Philippe Emile et al**
**De Clercq, Brants & Partners cv**
**Edgard Gevaertdreef 10a**
**9830 Sint-Martens-Latem (BE)**

(54) **Amino-functional polysiloxanes**

(57) The present invention relates to an amino-functional polysiloxane of formula (1)

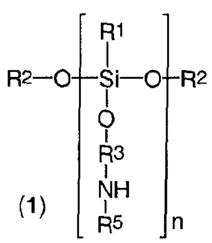

(1)

wherein each $R^1$ is independently selected from the group comprising alkyl and aryl radicals, each $R^2$ is independently selected from the group comprising hydrogen, alkyl and aryl radicals, n is selected so that the molecular weight for the functional polysiloxane is in the range of from 400 to 10,000 and $R^3$ is a bivalent radical or -O-$R^3$-NH-$R^5$ is hydroxy or alkoxy, and $R^5$ is selected from the group comprising hydrogen, aminoalkyl, aminoalkenyl, aminoaryl, aminocycloalkyl radical, optionally substituted by alkyl, aryl, cycloalkyl, halogen, hydroxy, alkoxy, thioalkyl, amino, amino derivatives, amido, amidoxy, nitro, cyano, keto, acyl derivatives, acyloxy derivatives, carboxy, ester, ether, esteroxy, heterocycle, alkenyl or alkynyl and wherein 0 to 90 % of -O-$R^3$-NH-$R^5$ is hydroxy or alkoxy.

EP 1 361 245 A1

Printed by Jouve, 75001 PARIS (FR)

## Description

### FIELD OF THE INVENTION

This invention relates to new amino-functional polysiloxanes useful as resins. This invention also relates to the use of these amino-functional polysiloxanes in resin-based compositions useful for protective coatings and the like.

### BACKGROUND

Polysiloxanes are known to give interesting properties as resins and coatings. True advancements in the state-of-the-art for protective coatings require substantial improvements in weathering (primarily ultraviolet resistance), heat resistance, chemical resistance and corrosion control. Polysiloxane chemistry offers the potential for providing many of these advancements. Polysiloxane is defined as a polymer consisting of repeating silicon-oxygen atoms in the backbone that imparts several advantages over previously used carbon-based polymer binders; one of these advantages being an enhanced chemical and thermal resistance due to the silicon-oxygen bond. Polysiloxane's polymer linkage is also transparent to ultraviolet light making it resistant to ultraviolet degradation. Finally, polysiloxane is not combustible and is resistant to a wide range of chemicals and solvents, including acids.

Amino-functional siloxanes have been described. US Pat. No. 4,413,104 to Wacker describes a process for preparing amino-functional polysiloxanes and copolymers thereof. These amino-functional polysiloxanes possess a Si-C bond between the polymeric polysiloxane backbone and the functional linking arm. Furthermore, DE 1 125 171 to Schering describes a process for preparing amino-functional siloxanes.

It is an object of the present invention to provide new amino-functional polysiloxane with a great variety in amine structures, which can be prepared with a simple method. It is another object to introduce amino-functional groups on a polysiloxane backbone, which are reactive, e.g. with epoxy radicals. It is yet another object of the present invention to provide new polymer compositions comprising said amino-functional polysiloxane, with improved hardness. It is another object to provide new polymer compositions comprising said amino-functional polysiloxane having improved gloss retention, and weathering resistance.

### SUMMARY OF THE INVENTION

In a first aspect of the present invention, novel amino-functional polysiloxanes of formula (1) are described, wherein each $R^1$ is independently selected from the group comprising alkyl and aryl, each $R^2$ is independently selected from the group comprising hydrogen, alkyl and aryl radicals, n is selected so that the molecular weight for the functional polysiloxane is in the range of from 400 to 10,000 and $R^3$ is a bivalent radical or -O-$R^3$-NH-$R^5$ is hydroxy or alkoxy, and $R^5$ is selected from the group comprising hydrogen, or aminoalkyl, aminoalkenyl, aminoaryl, aminocycloalkyl radical, optionally substituted by alkyl, aryl, cycloalkyl, halogen, hydroxy, alkoxy, thioalkyl, amino, amino derivatives, amido, amidoxy, nitro, cyano, keto, acyl derivatives, acyloxy derivatives, carboxy, ester, ether, esteroxy, heterocycle, alkenyl or alkynyl and wherein 0 to 90 % of -O-$R^3$-NH-$R^5$ is hydroxy or alkoxy.

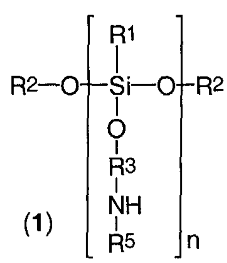

(**1**)

According to an embodiment, the amino-functional polysiloxane of formula (1) has preferably the following stoichiometric formula

$$R^1_aR^2_b(R^9O)_cSiO_{\frac{(4-a-b-c)}{2}},$$

wherein each $R^9$ is independently selected from hydrogen, alkyl, or -$R^3$-NH-$R^5$, and $R^1$, $R^2$, have the same meaning

as that defined above, a and b are each a real number from 0.0 to 2.0, more in particular from 0.1 to 2.0, c is a real number from 0.1 to 1.0, b/a is ranging from 0.2-2.0 and a+b+c is lower than 4, and wherein 0 to 90 % of $-O-R^9$ is hydroxy or alkoxy. In the above stoichiometric formula, a is preferably from 1.4 to 0.4, b is preferably from 0.5 to 1.5 and c is preferably from 0.1 to 0.4.

Said amino-functional polysiloxane possess a Si-O-C bond between the polymeric backbone and the functional group.

In a second aspect, the present invention relates to a method for the preparation of amino-functional polysiloxane of formula (1). The present invention further relates to the use of said amino-functional polysiloxane as hardener and in a coating.

In a third aspect the present invention provides new polymer compositions comprising said amino-functional polysiloxane of formula (1) and to a method of preparation thereof. Said polymers show improved hardness and improved gloss retention and weathering resistance.

The method of the present invention provides the advantage of being a simple one step synthesis of said amino-functional polysiloxane from available polysiloxane.

## DETAILED DESCRIPTION

The present invention relates to amino-functional polysiloxane of formula (1) wherein each $R^1$ is independently selected from the group comprising alkyl and aryl radicals having up to six carbon atoms, each $R^2$ is independently selected from the group comprising hydrogen, alkyl and aryl radicals, n is selected so that the molecular weight for the functional polysiloxane is in the range of from 400 to 10,000 and $R^3$ is a bivalent radical or $-O-R^3-NH-R^5$ is hydroxy or alkoxy, and $R^5$ is selected from the group comprising hydrogen, aminoalkyl, aminoalkenyl, aminoaryl, aminocycloalkyl radical, optionally substituted by alkyl, aryl, cycloalkyl, halogen, hydroxy, alkoxy, thioalkyl, amino, amino derivatives, amido, amidoxy, nitro, cyano, keto, acyl derivatives, acyloxy derivatives, carboxy, ester, ether, esteroxy, heterocycle, alkenyl or alkynyl and wherein 0 to 90 % of $-O-R^3-NH-R^5$ is hydroxy or alkoxy.

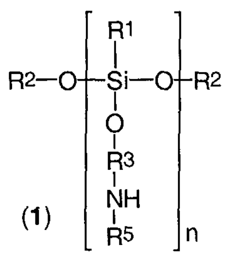

(**1**)

It is to be understood that formula (1) is illustrative only, and that the amino-functional polysiloxane according to the invention may contain from 0 to 90% of alkoxy or hydroxy radicals.

As used herein, the term "independently selected" indicates that the each radical R so described, can be identical or different. For example, each $R^1$ in compound of formula (1) may be different for each value of n.

As used herein "a real number" refers to a number which is positive and includes integers and fractions of integers or any rational or irrational number. For example a is a real number from 0.0 to 2.0 means that a may assume any value within the range from 0.0 to 2.0.

As used herein, the term "alkyl", alone or in combination, means straight and branched chained saturated hydrocarbon radicals containing from 1 to 10 carbon atoms, preferably from 1 to 8 carbon atoms, more preferably 1-6 carbon atoms. Examples of such radicals include methyl, ethyl, n-propyl, isopropyl, n-butyl, isobutyl, sec-butyl, tert-butyl, 2-methylbutyl, pentyl, iso-amyl, hexyl, 3-methylpentyl, octyl, 2-ethylhexyl and the like.

As used herein, the term "alkenyl", alone or in combination, defines straight and branched chained hydrocarbon radicals containing from 2 to about 18 carbon atoms, preferably from 2 to 8 carbon atoms, more preferably 2-6 carbon atoms containing at least one double bond such as, for example, ethenyl, propenyl, butenyl, pentenyl, hexenyl and the like.

The term "alkenylene", alone or in combination, defines bivalent straight and branched chained hydrocarbon radicals containing from 2 to about 18 carbon atoms, preferably from 2 to 8 carbon atoms, more preferably 2-6 carbon atoms containing at least one double bond such as, for example, ethenylene, propenylene, butenylene, pentenylene, hexenylene and the like.

The term "alkoxy" or "alkyloxy", alone or in combination, means alkyl ether radical wherein the term alkyl is as defined above. Examples of suitable alkyl ether radicals include methoxy, ethoxy, n-propoxy, isopropoxy, n-butoxy, iso-butoxy, sec-butoxy, tert-butoxy, hexanoxy and the like.

The term "alkylene", alone or in combination, defines bivalent straight and branched chained saturated hydrocarbon radicals containing from 1 to 10 carbon atoms, preferably from 1 to 8 carbon atoms, more preferably 1-6 carbon atoms such as, for example, methylene, ethylene, propylene, butylene, pentylene, hexylene and the like.

The term "alkynyl", alone or in combination, defines straight and branched chained hydrocarbon radicals having from 2 to 10 carbon atoms containing at least one triple bond, more preferably from 2 to about 6 carbon atoms. Examples of alkynyl radicals include ethynyl, propynyl, (propargyl), butynyl, pentynyl, hexynyl and the like.

The term "aminoalkylene" means a bivalent alkylene amine radical, wherein the term "alkylene" is defined as above. Examples of aminoalkylene radicals include aminomethylene ($-CH_2NH-$), aminoethylene ($-CH_2CH_2NH-$), aminopropylene, aminoisopropylene, aminobutylene, aminoisobutylene, aminohexylene and the like.

The term "aralkyl" alone or in combination, means an alkyl as defined herein, wherein an alkyl hydrogen atom is replaced by an aryl as defined herein. Examples of aralkyl radicals include benzyl, phenethyl, dibenzylmethyl, methylphenylmethyl, 3-(2-naphthyl)-butyl, and the like.

The term "aralkylene" as used herein, relates to a group of the formula alkylene-arylene in which alkylene is as defined above. Examples of aralkylene radicals include benzylene, phenethylene and the like.

The term "aryl" alone or in combination, is meant to include phenyl and naphtyl which both may be optionally substituted with one or more substituents independently selected from alkyl, alkoxy, halogen, hydroxy, amino, nitro, cyano, haloalkyl, carboxy, alkoxycarbonyl, cycloalkyl, heterocycle, amido, optionally mono- or disubstituted aminocarbonyl, methylthio, methylsulfonyl, and phenyl optionally substituted with one or more substituents selected from alkyl, alkyloxy, halogen, hydroxy, optionally mono- or disubstituted amino, nitro, cyano, haloalkyl, carboxyl, alkoxycarbonyl, cycloalkyl, heterocycle, optionally mono- or disubstituted aminocarbonyl, methylthio and methylsulfonyl; whereby the optional substituents on any amino function are independently selected from alkyl, alkyloxy, heterocycle, heterocycloalkyl, heterocyclooxy, heterocyclooxyakyl, phenyl, phenyloxy, phenyloxyalkyl, phenylalkyl, alkyloxycarbonylamino, amino, and aminoalkyl whereby each of the amino groups may optionally be mono- or where possible di-substituted with alkyl. Examples of aryl includes phenyl, p-tolyl, 4-methoxyphenyl, 4-(tert-butoxy)phenyl, 3-methyl-4-methoxyphenyl, 4-fluorophenyl, 4-chlorophenyl, 3-nitrophenyl, 3-aminophenyl, 3-acetamidophenyl, 4-acetamidophenyl, 2-methyl-3-acetamidophenyl, 2-methyl-3-aminophenyl, 3-methyl-4-aminophenyl, 2-amino-3-methylphenyl, 2,4-dimethyl-3-aminophenyl, 4-hydroxyphenyl, 3-methyl-4-hydroxyphenyl, 1-naphthyl, 2-naphthyl, 3-amino-1-naphthyl, 2-methyl-3-amino-1-naphthyl, 6-amino-2-naphthyl, 4,6-dimethoxy-2-naphthyl and the like.

The term "arylene" as used herein, includes a bivalent organic radical derived from an aromatic hydrocarbon by removal of two hydrogens, such as phenylene.

The term "cycloalkyl" alone or in combination, means a saturated or partially saturated monocyclic, bicyclic or polycyclic alkyl radical wherein each cyclic moiety contains from about 3 to about 8 carbon atoms, more preferably from about 3 to about 7 carbon atoms. Examples of monocyclic cycloalkyl radicals include cyclopropyl, cyclobutyl, cyclopentyl, cyclohexyl, cycloheptyl, cyclodecyl and the like. Examples of polycyclic cycloalkyl radicals include decahydronaphthyl, bicyclo [5.4.0] undecyl, adamantyl, and the like.

The term "cycloalkylalkyl" means an alkyl radical as defined herein, in which at least one hydrogen atom on the alkyl radical is replaced by a cycloalkyl radical as defined herein. Examples of such cycloalkylalkyl radicals include cyclopropylmethyl, cyclobutylmethyl, cyclopentylmethyl, cyclohexylmethyl, 1-cyclopentylethyl, 1-cyclohexylethyl, 2-cyclopentylethyl, 2-cyclohexylethyl, cyclobutylpropyl, cyclopentylpropyl, 3-cyclopentylbutyl, cyclohexylbutyl and the like.

The term "haloalkyl" alone or in combination, means an alkyl radical having the meaning as defined above wherein one or more hydrogens are replaced with a halogen, preferably, chloro or fluoro atoms, more preferably fluoro atoms. Examples of such haloalkyl radicals include chloromethyl, 1-bromoethyl, fluoromethyl, difluoromethyl, trifluoromethyl, 1,1,1-trifluoroethyl and the like.

As used herein, the term "halo" or "halogen" as a group or part of a group is generic for fluoro, chloro, bromo or iodo.

The term "heterocycle" alone or in combination, is defined as a saturated or partially unsaturated or aromatic monocyclic, bicyclic or polycyclic heterocycle having preferably 3 to 12 ring members, more preferably 5 to 10 ring members and more preferably 5 to 8 ring members, which contains one or more heteroatom ring members selected from nitrogen, oxygen or sulfur and which is optionally substituted on one or more carbon atoms by alkyl, alkyloxy, halogen, hydroxy, oxo, optionally mono- or disubstituted amino, nitro, cyano, haloalkyl, carboxyl, alkoxycarbonyl, cycloalkyl, optionally mono- or disubstituted aminocarbonyl, methylthio, methylsulfonyl, aryl and a saturated or partially unsaturated or aromatic monocyclic, bicyclic or tricyclic heterocycle having 3 to 12 ring members which contains one or more heteroatom ring members selected from nitrogen, oxygen or sulfur and whereby the optional substituents on any amino function are independently selected from alkyl, alkyloxy, heterocycle, heterocycloalkyl, heterocyclo-oxy, heterocyclo-oxyalkyl, aryl, aryloxy, aryloxyalkyl, aralkyl, alkyloxycarbonylamino, amino, and aminoalkyl whereby each of the amino groups may optionally be mono- or where possible di-substituted with alkyl.

The term "heterocycloalkyl" means alkyl as defined herein, wherein an alkyl hydrogen atom is replaced by a heterocycle as defined herein. Examples of heterocycloalkyl radicals include 2-pyridylmethyl, 3- (4-thiazolyl)-propyl,

and the like.

As used herein, the term (C=O) forms a carbonyl moiety with the carbon atom to which it is attached.

The term "alkylthio" means an alkyl thioether radical, wherein the term "alkyl" is defined as above. Examples of alkylthio radicals include methylthio ($SCH_3$), ethylthio ($SCH_2CH_3$), n-propylthio, isopropylthio, n-butylthio, isobutylthio, sec-butylthio, tert-butylthio, n-hexylthio, and the like.

According to an embodiment, the present invention relates to amino-functional polysiloxane of formula (1) wherein the bivalent radical $R^3$ may be selected from the group comprising alkylene, alkyleneoxy, alkenylene, arylene, aralkylene, aralkenylene, aminoalkylene, alkyleneoxyaralkyloxyalkylene, $CH_2$-phenyl-$(CH_2)_n$-, -phenyl-$(CH_2)_n$-, -C(=O)-, -C(=S)-, -$S(=O)_2$-, alkylene-C(=O)-, alkylene-C(=S)-, alkylene-$S(=O)_2$-, -$NR^4$-C(=O)-, -$NR^4$-alkylene-C(=O)-, or -$NR^4$-$S(=O)_2$ whereby either the C(=O) group or the $S(=O)_2$ group is attached to the $NR^4$ moiety, optionally substituted by alkyl, aryl, cycloalkyl, halogen, hydroxy, alkoxy, thioalkyl, amino, amino derivatives, amido, amidoxy, nitro, cyano, keto, acyl derivatives, acyloxy derivatives, carboxy, alkylcarboxy, ester, alkylester, ether, esteroxy, sulfonic acid, sulfonyl derivatives, sulfinyl derivatives, heterocycle, alkenyl or alkynyl, wherein $R^4$ is hydrogen, alkyl, alkenyl, aralkyl, cycloalkyl, cycloalkylalkyl, aryl, heterocycle or heterocycloalkyl. According to another embodiment, the radical -O-$R^3$-NH-$R^5$ may be a radical of formula (1'),

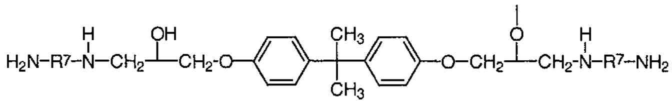

(1')

wherein $R^7$ is selected from the group comprising alkyl, alkenyl, aryl, cycloalkyl radical, optionally substituted by alkyl, aryl, cycloalkyl, halogen, hydroxy, alkoxy, thioalkyl, amino, amino derivatives, amido, amidoxy, nitro, cyano, keto, acyl derivatives, acyloxy derivatives, carboxy, ester, ether, esteroxy, heterocycle, alkenyl or alkynyl.

More in particular the present invention relates to amino-functional polysiloxane of formula (1) wherein $R^3$ may be alkylene, alkenylene, arylene, aralkylene, aralkenylene, aminoalkylene, alkyleneoxy, alkyleneoxyaralkyloxyalkylene, $CH_2$-phenyl-$(CH_2)_n$-, -phenyl-$(CH_2)_n$-, optionally substituted by alkyl, aryl, cycloalkyl, hydroxy, alkoxy, thioalkyl, amino, amino derivatives, amido, amidoxy, acyl derivatives, acyloxy derivatives, carboxy, alkylcarboxy, ester, alkylester, ether, esteroxy, heterocycle, alkenyl or alkynyl.

Non-limiting examples of amino-functional polysiloxane according to the invention include those described in the examples and those listed in Table 1.

These amino-functional polysiloxanes have a good reactivity as hardener as they contain at least one primary amine functional moiety providing a better cross-linking reaction in a polymeric composition such as a coating. The amino-functional polysiloxanes according to this invention are new polymers easily produced from commercial polysiloxanes and their functionality in amines can be broad. They are suitable as hardeners with epoxy resins and can exhibit fast curing at room temperature and good hardness development.

In a second aspect, the present invention relates to a method for the preparation of the above-described amino-functional polysiloxane of formula (1). Said method comprises the step of reacting a polysiloxane of formula (2) with an amino-alcohol of formula (3) comprising at least one hydroxyl and at least one primary amine, optionally in the presence of a suitable catalyst, wherein $R^1$, $R^2$, $R^3$, $R^5$ and n have the same meaning as that defined above, and $R^6$ is a radical selected from the group comprising hydrogen, alkyl and aryl radicals.

**(1)** 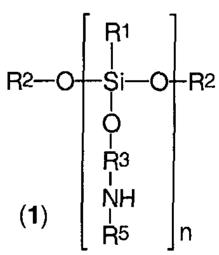 **(2)** 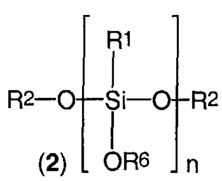 $HO-R^3-NH-R^5$ **(3)**

According to an embodiment, the polysiloxane of formula (2) has preferably the following stoichiometric formula

$$R^1_aR^2_b(R^6O)_cSiO_{\frac{(4-a-b-c)}{2}},$$

wherein $R^1$, $R^2$, $R^6$ have the same meaning as that defined above, a and b are each a real number from 0.0 to 2.0, more in particular from 0.1 to 2.0, c is a real number from 0.1 to 1.0, b/a is ranging from 0.2-2.0 and a+b+c is lower than 4.

Suitable polysiloxanes of formula (2) may have a molecular weight ranging from 500 to 6000 and an alkoxy content ranging from 10 to 50 %.

Examples of suitable polysiloxanes of formula (2) for said process include the alkoxy- and silanol-functional polysiloxanes. Suitable alkoxy-functional polysiloxanes include, but are not limited to: DC-3074 and DC-3037 from Dow Corning; Silres SY-550, and SY-231 from Wacker Silicone; and Rhodorsil Resin 10369 A, Rhodorsil 48V750, 48V3500 from Rhodia Silicones; and SF1147 from General Electrics. Suitable silanol-functional polysiloxanes include, but are not limited to, Silres SY 300, Silres SY 440, Silres MK and REN 168 from Wacker Silicone, Dow Corning's DC-840, DC233 and DC-431 HS silicone resins and DC-Z-6018 intermediate and Rhodia Silicones' Rhodorsil Resin 6407 and 6482 X.

In order to obtain said amino-functional polysiloxane of formula (1) polysiloxane starting material of formula (2) may be reacted with any suitable aminoalcohol of formula (3). Said reaction may be partial or total, and the amino-functional polysiloxane obtained at the end of the reaction may contain from 0 to 90 % of alkoxy or hydroxy radicals.

Examples of suitable aminoalcohol of formula (3) according to the invention, include but are not limited to 2-amino-1-ethanol, 1-amino-2-propanol, 2-amino-1-propanol, 3-amino-1-propanol, 2-amino-1-butanol, 3-amino-1-butanol, neopentanolamine (3-amino-2,2-dimethyl-1-propanol), 2-amino-1-methyl-1-propanol, 2-amino-2-methyl-1-propanol, 2-amino-2-ethylpropane-1,3-diol, 2-amino-2-methylpropane-1,3-diol, 5-amino-1-pentanol, 1.2-dimethylethanolamine, 3-alloxy-2-hydroxy-propylamine, 1-amino-2-methyl-pentanol, N-methylethanolamine, N-hydroxyethylpropanediamine, N-cyclohexylethanolamine, p-(beta-hydroxyethyl)-aniline, N-(beta-hydroxypropyl)-N'-(beta-aminoethyl) piperazine, 2-hydroxy-3-(m-ethylphenoxy) propylamine, 2-hydroxy-2-phenylethyl amine, tris(hydroxymethyl) aminomethane, 2-aminobenzyl alcohol, 3-aminobenzyl alcohol, 3-amino-o-cresol ,4-amino-o-cresol,5-amino-o-cresol, 2-amino-p-cresol, 4-amino-m-cresol, 63-amino-m-cresol, 1-amino-1-cyclopentane methanol, 2-(2-aminoethoxy)ethanol, 2-(2-aminoethylamino)ethanol, 6-amino-1-hexanol, 3-(1-hydroxyethyl)aniline, 2-amino-1-phenylethanol, 1-aminomethyl-1-cyclohexanol, 8-amino-2-naphthol, 2-amino-phenethyl alcohol, 4-aminophenethyl alcohol, 3-( alpha-hydroxyethyl) aniline, Mannich bases, the reaction product of an aminoalcohol with cis-2-pentenenitrile followed by an hydrogenation step, aminophenols such as p-aminophenol, tyrosine, tyramine and the like, epoxy-amine adducts and mixtures thereof. According to another embodiment, more suitable aminoalcohol of formula (3) may be selected from the group comprising 2-amino-1-ethanol, 2-amino-1-butanol, 1-amino-2-propanol, 2-amino-1-propanol, 3-amino-1-propanol, 2-(2-aminoethyoxy)ethanol, 2-(2-aminoethylamino)ethanol.

According to another embodiment, aminoalcohols of formula (3) according to the invention can be epoxy amine adducts. These aminoalcohols are the result of a reaction between an epoxy and amine, and may be defined as higher molecular weight amines (with epoxy backbone). For examples these aminoalcohols can be of formula (5), (6) or (7), wherein $R^7$ is selected from the group comprising alkyl, alkenyl, aryl, cycloalkyl radical, optionally substituted by alkyl, aryl, cycloalkyl, halogen, hydroxy, alkoxy, thioalkyl, amino, amino derivatives, amido, amidoxy, nitro, cyano, keto, acyl derivatives, acyloxy derivatives, carboxy ester, ether, esteroxy, heterocycle, alkenyl or alkynyl and $R^8$ is selected from the group comprising linear or branched aliphatic radicals, preferably branched $C_{1-20}$ alkyl radical.

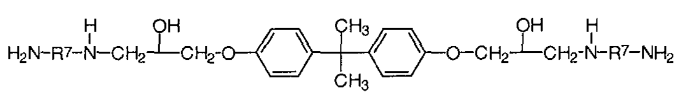
(5)

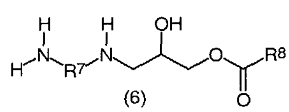
(6)

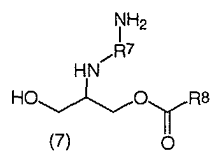
(7)

These aminoalcohols can be obtained by the reaction of an epoxy with a polyamine. Suitable epoxies for this reaction may be produced by the attachment of an epoxide group to both ends of a paraffinic hydrocarbon chain (for example, diepoxides derived from butanediol) or of a polyether chain, such as α-ω-diepoxy polypropylene glycol. More exotic diepoxy resins suitable for said reaction include but are not limited to vinylcyclo hexene dioxide, 3,4-epoxycyclohexylmethyl 3,4-epoxycyclohexane monocarboxylate, 3-(3,4-epoxycyclo hexyl)-8,9-epoxy- 2,4-dioxaspiro-[5.5]undecane, bis(2,3-epoxycyclopentyl) ether, bis(3,4-epoxy-6-methylcyclohexyl) adipate and resorcinol diglycidyl ether. Other suitable epoxy resins can contain more than two epoxide functional groups per molecule, such as epoxidized soya oils, polyglycidyl ethers of phenolic resins of the novolak type, p-aminophenoltriglycidyl ether or 1,1,2,2-tetra(p-hydroxyphenyl)ethane tetraglycidyl ether. Another class of epoxy resins suitable for use in said polymer composition comprises the epoxy polyethers obtained by reacting an epihalohydrin (such as epichlorohydrin or epibromohydrin) with a polyphenol in the presence of an alkali. Suitable polyphenols include resorcinol, catechol, hydroquinone, bis(4-hydroxyphenyl)-2,2-propane, i.e. bisphenol A; bis(4-hydroxyphenyl)-1,1-isobutane, 4,4-dihydroxybenzophenone; bis(4-hydroxyphenyl-1,1-ethane; bis(2-hydroxynaphenyl)-methane; bis(4-hydroxyphenyl)methane i.e. bisphenol F, and 1,5-hydroxynaphthalene. One very common polyepoxide is a polyglycidyl ether of a polyphenol, such as bisphenol A. Another class of suitable epoxy resin comprises the hydrogenated epoxy resin based on bisphenol A such as Eponex 1510 from Shell. Other examples of suitable epoxy resins are the polyglycidyl ethers of polyhydric alcohols. These compounds may be derived from such polyhydric alcohols as ethylene glycol, diethylene glycol, triethylene glycol, 1,2- propylene glycol, 1,4-butylene glycol, 1,5-pentanediol, 1,2,6-hexane- triol, glycerol, trimethylolpropane, and bis(4-hydroxycyclohexyl)-2,2- propane. A detailed list of suitable epoxide for said reaction can be found in the handbooks A. M. Paquin, "Epoxidverbindungen und Harze" (Epoxide Compounds and Resins), Springer Verlag, Berlin 1958, Chapter IV and H. Lee and K. Neville, "Handbook of Epoxy Resins" MC Graw Hill Book Company, New York 1982 Reissue, as well as C. A. May, "Epoxy Resins-Chemistry and Technology", Marcel Dekker, Inc. New York and Basle, 1988.

Suitable epoxy for said reaction may also be selected from the glycidyl ester of branched carboxylic acids such as the glycidyl ester of pivalic or versatic acid containing 5 or 10 carbon atoms in the acid moiety, such as for example Cardura E5 or Cardura E10 from Resolution; non-aromatic diglycidyl ethers of cyclohexane dimethanol, bisphenol A diglycidyl ether such as Epikote 828, hydrogenated bisphenol A diglycidyl ether (DGEBA) type epoxy resins, such as Eponex 1510; aliphatic epoxy resins such as Araldite DY-C, DY-T and DY-0397 from Vantico; and hydrogenated bisphenol F diglycidyl ether type epoxy resin such as Epikote 862 from Resolution Performance Products and hydrogenated bisphenol F diglycidyl ether type epoxy resin such as Rütapox VE4261/R from Rutgers Bakelite.

Suitable polyamine include 1,2-diaminoethane, 1,2-diaminopropane, 1,3-diaminopropane, 1,4-diaminobutane and higher homologues, as well as 2-methyl-1,5-diaminopentane, 1,3-diaminopentane, 2,2,4-trimethyl-1,6-diaminohexane and 2,4,4-trimethyl-1,6-diaminohexane as well as industrial mixtures thereof, 1-amino-3-aminomethyl-3,5,5-trimethylcyclohexane, 2,2-dimethyl-1,3-diaminopropane, 1,3-bis(aminomethyl)cyclohexane, 1,2-diaminocyclohexane, 1,3-bis(aminomethyl)benzene, bis(4-aminocyclohexyl)methane, bis(4-amino-3-methylcyclohexyl)methane, 3-azapentane-1,5-diamine, 4-azaheptane-1,7-diamine, 3,6-diazaoctane-1,8-diamine, benzyloxypropylaminepropylamine, diethylamino-propylamine, 3(4),8(9)-bis(aminomethyl)tricyclo-[5.2.1.$0^{2,6}$]decane, 3-methyl-3-azapentane-1,5-diamine, 3,6-dioxaoctane-1,8-diamine, 3,6,9-trioxaundecane-1,11-diamine, 4,7-dioxadecane-1,10-diamine, 4,7,10-trioxatridecane-1,13-diamine, 4-aminomethyl-1,8-diaminooctane, 2-butyl-2-ethyl-1,5-diaminopentane, 3-(aminomethyl)benzylamine (MXDA), 5-(aminomethyl)bicyclo[[2.2.1]hept-2-yl]methylamine (NBDA), polyamino imidazoline (Versamid 140), as well as diethylenetriamine (DETA), triethylenetetramine (TETA, which is a mixture of several polyamines), pentaethylene-tetramine, dimethyldipropylene-triamine, dimethylaminopropyl-aminopropylamine (DMAPAPA), N-2-(aminoethyl)piperazine (N-AEP), N-(3-aminopropyl)piperazine, norbornane diamine, epilink MX, isophoronediamine (IPD), diaminodicyclohexylmethane (PACM), dimethyldiaminodicyclohexyl methane (Laromin C260), tetramethylhexamethylenediamine (TMD), bis aminomethyl-dicyclopentadiene (tricyclodecyldiamine, TCD), diaminocyclohexane, diethylaminopropylamine (DEAPA), and the like. Suitable polyoxyalkylenepolyamines can be obtained, for example, under the trade name ®Jeffamine such as polyoxypropylene triamine (Jeffamine T403) and polyoxypropylene diamine (Jeffamine D230), and suitable polyiminoalkylenepolyamines are available, for example, under the trade name ®Polymin. In addition, mixtures from several amines are possible.

Primary aliphatic monoamines can also be added to the curing composition. Suitable monoamines include, for example, unbranched 1-aminoalkanes with for example a saturated alkyl radical of 6 to 22 carbon atoms. The higher representatives of this class of compounds also are called fatty amines. Non-limiting examples include laurylamine, stearylamine, palmitylamine and biphenylamine. However, monoamines with branched chains also are suitable, for example 2-ethylhexan-1-amine or 3,5,5-trimethylhexan-1-amine, amino-2-butane, methoxypropylamine, isopropoxypropylamine. They can be employed individually or as a mixture, and in particular in an amount ranging from 0.1 to 10 %, and for example in an amount ranging from 1 to 5 %.

The reaction between the polysiloxane of formula (2) and amino alcohol of formula (3) may also be performed in the presence of a suitable catalyst. Said catalyst may, for example, be an inorganic acid such as hydrochloric acid, nitric acid, sulfuric acid or phosphoric acid, an organic acid such as acetic acid, paratoluenesulfonic acid, formic acid or an alkaline catalyst such as potassium hydroxide, sodium hydroxide, calcium hydroxide or ammonia, an organic metal, a metal alkoxide, an organic tin compound such as dibutyltin dilaurate, dibutyltin dioctiate or dibutyltin diacetate, or a boron compound such as boron butoxide or boric acid. Illustrative examples of metal alkoxide include aluminum triethoxide, aluminum triisopropoxide, aluminum tributoxide, aluminum tri-sec-butoxide, aluminum diisopropoxy-secbutoxide, aluminum diisopropoxyacetyl acetonate, aluminum di-sec-butoxyacetyl acetanoate, aluminum diisopropoxyethyl acetoacetate, aluminum di-sec-butoxyethylacetoacetate, aluminum trisacetyl acetonate, aluminum trisethylaceto acetate, aluminum acetylacetonate bisethylacetoacetate, titanium tetraethoxide, titanium tetraisopropoxide, titanium (IV) butoxide, titanium diisopropoxybisacetyl acetonate, titanium diisopropoxybisethyl acetoacetate, titanium tetra-2-ethylhexyloxide, titanium diisopropoxybis(2-ethyl-1,3-hexanediolate), titanium dibutoxybis(triethanolaminate), zirconium tetrabutoxide, zirconium tetraisopropoxide, zirconium tetramethoxide, zirconium tributoxide monoacetylacetonate, zirconium dibutoxide bisacetylacetonate, zirconium butoxide trisacetylacetonate, zirconium tetraacetylacetonate, zirconium tributoxide monoethylacetoacetate, zirconium dibutoxide bisethylacetoacetate, zirconium butoxide trisethylacetoacetate and zirconium tetraethylacetoacetate. In addition to these compounds, cyclic 1,3,5-triisopropoxycyclotrialuminoxane and the like can also be used. Among these compounds, aluminum triisopropoxide, aluminum tri-sec-butoxide, aluminum diisopropoxyethylacetoacetate, aluminum di-sec-butoxyethylacetoacetate, aluminum trisacetylacetonate, titanium tetraisopropoxide, titanium tetrabutoxide and zirconium tetrabutoxide are used preferably. According to an embodiment, the present invention relates to a method wherein the catalyst is titanium (IV) butoxide.

According to another aspect, the present invention relates to the use of an amino-functional polysiloxane according to the invention as a hardener.

The present invention also relates to the use of an amino-functional polysiloxane as described above in a coating.

The present invention further relates to a polymer composition comprising an amino-functional polysiloxane according to the invention, an epoxy resin, optionally a polysiloxane resin and optionally a catalyst. The polymer composition can include these amino-functional polysiloxanes in an amount ranging from 40 to 90 % by weight (% of total weight of polymer: amino-functional polysiloxane + epoxy), or for example in an amount ranging from 40 to 80 % by weight and for example in an amount ranging from 40 to 75 % by weight.

More in particular, the polymer composition can include the amino-functional polysiloxane according to the invention is an amount ranging from 40 to 80 % by weight and the epoxy resin in an amount ranging from 20 to 60 % by weight.

Examples of suitable epoxy resins for the polymer composition are the same as that described above. A detailed list of suitable epoxy resins can be found in the handbooks A. M. Paquin, "Epoxidverbindungen und Harze" (Epoxide Compounds and Resins), Springer Verlag, Berlin 1958, Chapter IV and H. Lee and K. Neville, "Handbook of Epoxy Resins" MC Graw Hill Book Company, New York 1982 Reissue, as well as C. A. May, "Epoxy Resins-Chemistry and Technology", Marcel Dekker, Inc. New York and Basle, 1988.

If appropriate, the polymer composition according to the invention may additionally comprise a diluent which is inert. Examples of suitable diluents include aliphatic linear, branched or cyclic ethers having 4 to 20 carbon atoms and mixed aliphatic-aromatic ethers having 7 to 20 carbon atoms, such as dibenzyl ether, tetrahydrofuran, 1,2-dimethoxyethane or methoxybenzene; aliphatic linear, branched or cyclic or mixed aliphatic-aromatic ketones having 4 to 20 carbon atoms, such as butanone, cyclohexanone, methyl isobutyl ketone or acetophenone; aliphatic linear, branched or cyclic or mixed aromatic-aliphatic alcohols having 4 to 20 carbon atoms, such as methanol, ethanol, butanol, 2-propanol, isobutanol, isopropanol, benzyl alcohol, methoxypropanol or furfuryl alcohol; aliphatic linear, branched or cyclic or mixed aromatic-aliphatic esters such as methoxypropylacetate, ethoxypropylacetate or DBE (dibasic esters from Dupont, mixture of dimethyl adipate, succinate and glutarate); aliphatic linear, branched or cyclic or mixed aromatic-aliphatic hydrocarbons such as toluene, xylene, heptane and mixtures of aliphatic and aromatic hydrocarbons having a boiling range above 80 °C under normal pressure, as well as low-viscosity coumarone-indene resins, styrenated phenolic resins or xylene-formaldehyde resins. Aliphatic alcohols having one phenyl radical, such as benzyl alcohol, 1-phenoxypropane-2,3-diol, 3-phenyl-1-propanol, 2-phenoxy-1-ethanol, 1-phenoxy-2-propanol, 2-phenoxy-1-propanol, 2-phenylethanol, 1-phenyl-1-ethanol or 2-phenyl-1-propanol, are preferred. The diluents can be employed individually or as a mixture, and in particular in a amount ranging from 1 to 35 % by weight, for example in an amount ranging from 5 to 25 % by weight and for example in an amount ranging from 10 to 30 %.

The polymer composition may also contain auxiliaries or additives such as pigments or filler ingredients, solvents, colorants, mineral oils, fillers, elastomers, antioxidants, stabilizers, defoamers, extenders, rheological modifiers, plasticizers, thixotropic agents, adhesion promoters, catalysts, pigment pastes, reinforcing agents, flow control agents, thickening agents, flame-retarding agents, additional hardeners and additional curable compounds, depending on the application.

Suitable pigments may be selected from organic and inorganic color pigments which may include titanium dioxide, carbon black, lampblack, zinc oxide, natural and synthetic red, yellow, brown and black iron oxides, toluidine and benzidine yellow, phthalocyanine blue and green, and carbazole violet, and extender pigments including ground and crystalline silica, barium sulfate, magnesium silicate, calcium silicate, mica, micaceous iron oxide, calcium carbonate, zinc powder, aluminum and aluminum silicate, gypsum, feldspar and the like. The amount of pigment that is used to form the composition is understood to vary, depending on the particular composition application, and can be zero when a clear composition is desired. For example a polymer composition may comprise up to 50 % by weight fine particle size pigment and/or filler. Depending on the particular end use, a preferred polymer composition may comprise approximately 25 % by weight fine particle size filler and/or pigment.

Additional water may be added to accelerate cure of said polymer composition depending on ambient conditions. The sources of water are mainly atmospheric humidity and adsorbed moisture on the pigment or filler material.

Other sources of water may include trace amounts present in the hardener, thinning solvent, or other ingredients that could be added to said composition.

Curing of said polymer composition according to the invention typically can proceed very rapidly, and in general can take place at a temperature within the range of from -10 °C to +50 °C, in particular from 0 °C to 40 °C, more in particular from 3 to 25 °C.

The present invention further relates to a method for the preparation of a polymer composition as described above, comprising the step of mixing an amino-functional polysiloxane according to the invention, with an epoxy resin, optionally a polysiloxane resin and optionally a catalyst.

Examples of suitable catalysts for said method are described above. Up to 10 % by weight catalyst may be added to the polymer composition, or may be added as an entirely separate component, to speed drying and curing of the polymer composition. As described above useful catalysts include metal driers well known in the paint industry, e.g. zinc, manganese, zirconium, titanium, cobalt, iron, lead and tin containing driers. Suitable catalysts include organotin catalysts. For example, dibutyl tin dilaurate, dibutyl tin diacetate, organotitanates, sodium acetate, and aliphatic secondary or tertiary polyamines including propylamine, ethylamino ethanol, triethanolamine, triethylamine, and methyl diethanol amine may be used alone or in combination.

Other suitable catalysts include acids such as organic acids, inorganic acids, organic sulfonic acids, esters of sulfuric acid and superacids. Organic acids include acetic acid, formic acid and the like. Inorganic acids include sulfuric acid, hydrochloric acid, perchloric acid, nitric acid, phosphoric acid, and the like. Organic sulfonic acids include both aromatic and aliphatic sulfonic acids. Representative sulfonic acids that are commercially available include methanesulfonic, trifluoromethanesulfonic, benzenesulfonic, dodecylbenzenesulfonic, dodecyldiphenyloxide sulfonic, 5-methyl-1-naphthylenesulfonic, and p-toluenesulfonic acid, sulfonated polystyrene, and the sulfonates derived from polytetrafluoroethylenes. Superacids suitable as catalysts are described in G. A. Olah, G. K. S. Prakash, and J. Sommer, Superacids, John Wiley & Sons: New York, 1985. Useful superacids include perchloric, fluorosulfuric, trifluoromethanesulfonic, and perfluoroalkylsulfonic acids. They also include Lewis superacids such as $SbF_5$, $TaF_5$, $NbF_5$, $PF_5$, and $BF_3$. Superacids also include hydrogen fluoride in combination with fluorinated Lewis acids such as $SbF_5$, $TaF_5$, $NbF_5$, $PF_5$, and $BF_3$. They also include oxygenated Bronsted acids such as sulfuric, fluorosulfuric, trifluoromethanesulfonic, and perfluoroalkylsulfonic acid in combination with Lewis acids such as $SbF_5$, $TaF_5$, $NbF_5$, $PF_5$, and $BF_3$.

Other examples of suitable catalysts include nitrate of a polyvalent metal ion such as calcium nitrate, magnesium nitrate, aluminum nitrate, zinc nitrate, or strontium nitrate.

The present invention further relates to an epoxy-polysiloxane polymer composition obtainable by combining:

a sufficient amount of an amino-functional polysiloxane of formula (1) as a hardener with

a polysiloxane of formula (4)

an epoxy resin having more than 1,2 epoxy groups per molecule with an epoxy equivalent weight ranging from 100 to 5000

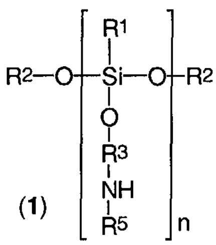
(1)

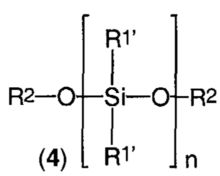
(4)

wherein each $R^{1'}$ is independently selected from the group comprising hydroxy, alkyl, aryl, and alkoxy radicals, $R^1$, $R^2$, n, $R^3$ and $R^5$ have the same meaning as that defined above.

Examples of suitable epoxy resins for the epoxy-polysiloxane polymer composition are the same as that described above. Preferred epoxy resins include non-aromatic diglycidyl ethers of cyclohexane dimethanol, bisphenol A diglycidyl ether, hydrogenated bisphenol A diglycidyl ether (DGEBA) type epoxy resins, such as Heloxy 107, Eponex 1510 and 1513 from Resolution Performance Products; Erisys GE-22, Epalloy 5000 and 5001 from CVC Specialty Chemicals; Polypox R11 from UPPC GmbH; Epo Tohto ST-1000 and ST-3000 from Tohto Kasei; Epodil 757 from Air Products; and Araldite DY-C from Vantico. Other suitable non-aromatic epoxy resins include DER 732 and 736 from Dow Chemical; Heloxy 67, 68, 48, 84, 505 and 71 each from Resolution Performance Products; Erisys GE-20, GE-21, GE-23, GE-30, GE-31 and GE-60 from CVC Specialty Chemicals; Polypox R3, R14, R18, R19, R20 AND R21 from

UPPC GmbH; Araldite DY-C, DY-T and DY-0397 from Vantico; ERL4221 from Union Carbide; and Aroflint 607 from Reichold Chemicals and hydrogenated bisphenol F diglycidyl ether type epoxy resin such as Epikote 862 from Resolution Performance Products and hydrogenated bisphenol F diglycidyl ether type epoxy resin such as Rütapox VE4261/R from Rutgers Bakelite.

Examples of suitable polysiloxanes include the polysiloxane of formula (4) wherein each $R^{1'}$ is independently selected from the group comprising hydroxy, alkyl, aryl, and alkoxy radicals, each $R^2$ is independently selected from the group comprising hydrogen, alkyl and aryl radicals, n is selected so that the molecular weight for the functional polysiloxane is in the range of from 400 to 10,000. Other examples of suitable polysiloxane include the polysiloxane of formula (2) as described above. The polymer composition may also contain some unmodified polysiloxane.

This epoxy-polysiloxane polymer composition may also contain auxiliaries or additives such as pigments or filler ingredients, solvents, colorants, mineral oils, fillers, elastomers, antioxidants, stabilizers, defoamers, extenders, plasticizers, catalysts, pigment pastes, reinforcing agents, flow control agents, thickening agents, flame-retarding agents, additional hardeners and additional curable compounds, depending on the application.

The polymer compositions of the present invention exhibit an unexpected and surprising improvement in gloss retention. Moreover, the polymer composition of the present invention also shows an unexpected and surprising improvement in hardness development.

The polymer compositions according to the invention can find various industrial applications because of their favorable properties such as fast curing time, rapid drying, even at low temperatures and even under high atmospheric humidity. Typical industrial applications for said compositions include, for example, use for the production of shaped articles (casting resins) for tool construction, or for the production of coatings and/or intermediate coatings on many types of substrates, for example, on those of an organic or inorganic nature, such as textiles of natural or synthetic origin, plastics, glass, ceramic and building materials, such as concrete, fiberboards and artificial stones, but in particular on metals, such as optionally pretreated sheet steel, cast iron, aluminum and nonferrous metals, such as brass, bronze and copper. The polymer compositions according to the invention can furthermore be employed as constituents of adhesives, putties, laminating resins and synthetic resin cements, and in particular as constituents of paints and coatings for coating industrial objects, domestic appliances and furniture and in the shipbuilding industry, land storage tanks and pipelines and in the building industry, such as, for example, refrigerators, washing machines, electrical appliances, windows and doors.

They can be applied, for example, by brushing, spraying, rolling, dipping and the like. A particularly preferred field of use for the composition according to the invention is paint formulations.

The invention will be more readily understood by reference to the following examples, which are included merely for purposes of illustration of certain aspects and embodiments of the present invention and are not intended to limit the invention.

## EXAMPLES

Examples 1 to 13 describe the preparation of amino-functional polysiloxane according to the invention. In order to prepare said amino-functional polysiloxane, polysiloxane of formula (2) were reacted with different aminoalcohols.

The total amine value of the synthesized amino-functional polysiloxanes was determined according to method ASTM D2073-92

The low shear viscosity was measured with a Haake VT500 viscosimeter using a cylindrically-shaped E30 spindle at 23°C

The molecular weight distribution was determined by Gel Permeation Chromatography (GPC apparatus from Millipore) using THF as solvent, 3 columns of Plgel 5mm, mixed-D from Polymer Laboratories, calibration curves with commercial polystyrene standards.

Unless specified, the aminoalcohols used were purchased from Acros Organics or Aldrich.

### EXAMPLE 1

140 g of ethanolamine and 1110 g of polysiloxane resin Silres SY231 (Wacker) are mixed in a reaction vessel under nitrogen atmosphere equipped with a mechanical stirrer, a distilling column and a condenser. Titanium (IV) butoxide is added. The mixture is then heated at 170°C until all alcohols are distilled. The last volatile alcohols formed during reaction are then removed by applying vacuum. The modified polysiloxane has a MW of 1061 and a polydispersity of 4.99 (determined by GPC). NMR analysis showed that 0.6 % of ethanolamine is free and the concentration of the MeO groups is 10.3 %, the butoxy group is 5.5 % and the bonded aminoethyl group is 16.6 %. The amino value is 106.3 mg KOH/g.

EXAMPLE 2

129 g of 1-amino-2-propanol and 832 g of polysiloxane resin DC3074 (Dow Corning) are mixed in a reaction vessel under nitrogen atmosphere equipped with a mechanical stirrer, a distilling column and a condenser. The mixture is then heated at 160°C until all alcohols are distilled. The last volatile alcohols formed during reaction are then removed by applying vacuum. The modified polysiloxane has a MW of 1006 and a polydispersity of 7.45 (determined by GPC). NMR analysis showed that 2.3 % of 1-amino-2-propanol is free and the concentration of the MeO groups is 26.0 % and the bonded 1-amino-2-propyl groups is 13.7 %. The amino value is 105 mg KOH/g.

EXAMPLE 3

153 g of 2-amino-1-butanol and 832 g of polysiloxane resin DC3074 (Dow Corning) are mixed in a reaction vessel under nitrogen atmosphere equipped with a mechanical stirrer, a distilling column and a condenser. 45 g of Heptane and 1 g of titanium (IV) butoxide are added. The mixture is then heated at 175°C until all azeotrope mixture is distilled off. The last volatile alcohols formed during reaction are then removed by applying vacuum. The modified polysiloxane has a MW of 1123 and a polydispersity of 3.16 (determined by GPC). NMR analysis showed that 3 % of 2-amino-1-butanol is free and the concentration of the MeO groups is 25.0 % and the bonded 2-amino-1-butyl groups is 14.8 %. The viscosity (Haake, 23°C) is 6.5 dPa.s. The amino value is 103.8 mg KOH/g.

EXAMPLE 4:

306 g of 2-amino-1-butanol and 832 g of polysiloxane resin DC3074 (Dow Corning) are mixed in a reaction vessel under nitrogen atmosphere equipped with a mechanical stirrer, a distilling column and a condenser. 120g of heptane and 1 g of titanium (IV) butoxide are added. The mixture is then heated at 175°C until all azeotrope mixture is distilled off. The last volatile alcohols formed during reaction are then removed by applying vacuum. The modified polysiloxane has a MW of 843 and a polydispersity of 4.08 (determined by GPC). The amino value is 200 mg KOH/g. The Haake viscosity is 13 dPa.s at 23°C. The density at 20°C is 1.132 g/l.

EXAMPLE 5:

129 g of 3-amino-1-propanol and 832 g of polysiloxane resin DC3074 (Dow Corning) are mixed in a reaction vessel under nitrogen atmosphere equipped with a mechanical stirrer, a distilling column and a condenser. The mixture is then heated at 190°C until all alcohols are distilled. The last volatile alcohols formed during reaction are then removed by applying vacuum. The modified polysiloxane has a MW of 1283 and a polydispersity of 3.72 (determined by GPC). NMR analysis showed that 2.5 % of 3-amino-1-propanol is free and the concentration of the MeO groups is 24.4 % and the bonded 3-amino-1-propyl groups is 14.9 %. The amino value is 106 mg KOH/g.

EXAMPLE 6:

305 g of aminoethanol and 1110 g of polysiloxane resin Silres SY231 (Wacker) are mixed in a reaction vessel under nitrogen atmosphere equipped with a mechanical stirrer, a distilling column and a condenser. The mixture is then heated at 130°C until all alcohols are distilled. The last volatile alcohols formed during reaction are then removed by applying vacuum. The amino value is 163.7 mg KOH/g and the viscosity (Haake, 23°C) is 27 dPa.s. The density is 1.168 g/l at 20°C.

EXAMPLE 7:

153 g of 2-amino-1-butanol and 832 g of polysiloxane resin Silres SY231 (Wacker) are mixed in a reaction vessel under nitrogen atmosphere equipped with a mechanical stirrer, a distilling column and a condenser. The mixture is then heated at 175°C until all alcohols are distilled. During reaction, 1 g of titanium (IV) butoxide is added. The last volatile alcohols formed during reaction are then removed by applying vacuum. The amino value is 92 mg KOH/g and the viscosity (Haake, 23°C) is 29 dPa.s.

EXAMPLE 8:

153 g of 2-amino-1-butanol and 832 g of polysiloxane resin DC3074 (Dow Corning) are mixed in a reaction vessel under nitrogen atmosphere equipped with a mechanical stirrer, a distilling column and a condenser. The mixture is then heated at 175°C until all alcohols are distilled. The last volatile alcohols formed during reaction are then removed

by applying vacuum. The modified polysiloxane has a MW of 946 and a polydispersity of 32.2 (determined by GPC). The amino value is 97mg KOH/g and the viscosity (Haake, 23°C) is 5 dPa.s.

EXAMPLE 9:

a) epoxy-adduct between norbornane diamine and glycidylester of versatic acid:

154.4 g of norbornane diamine (from Degussa) and 250 g of Cardura E10 (from Resolution) are mixed in a reaction vessel under nitrogen atmosphere equipped with a mechanical stirrer, a distilling column and a condenser. The mixture is then heated at 60°C during one hour, then at 100°C for two hours. The modified amine has an amino value of 261 mg KOH/g.

b) reaction of 9a) with polysiloxane :

210 g of aminoalcohol from example 9a) and 111 g of polysiloxane resin DC3074 (Dow Corning) are mixed in a reaction vessel under nitrogen atmosphere equipped with a mechanical stirrer, a distilling column and a condenser. 100g of heptane are added to the mixture. The mixture is then heated at 175°C until all azeotrope is distilled. The last volatile alcohols formed during reaction are then removed by applying vacuum. The modified polysiloxane has a MW of 2060 and a polydispersity of 12.7 (determined by GPC). The amine value is 154 mg KOH/g and the viscosity (Haake, 23°C) is 20 dPa.s.

EXAMPLE 10:

10a) epoxy-adduct between isophoronediamine and glycidylester of versatic acid:

170 g of isophoronediamine (Vestamin IPD from Degussa) and 250 g of Cardura E10 (from Resolution) are mixed in a reaction vessel under nitrogen atmosphere equipped with a mechanical stirrer, a distilling column and a condenser. The mixture is then heated at 100°C for two hours. The modified aminoalcohol has an amine value of 265 mg KOH/g.

10b) reaction of 10a) with polysiloxane

210 g of aminoalcohol from example 10 and 111 g of polysiloxane resin DC3074 (Dow Corning) are mixed in a reaction vessel under nitrogen atmosphere equipped with a mechanical stirrer, a distilling column and a condenser. 100g of heptane are added to the mixture. The mixture is then heated at 175°C until all azeotrope is distilled. The last volatile alcohols formed during reaction are then removed by applying vacuum. 60g of xylene are added. The modified polysiloxane has a MW of 2060 and a polydispersity of 12.7 (determined by GPC). The amine value is 151 mg KOH/g and the viscosity (Haake, 23°C) is 72 dPa.s.

EXAMPLE 11:

194.8 g of 2-(2-aminoethylamino)ethanol and 830 g of polysiloxane resin Silres SY231 (Wacker) are mixed in a reaction vessel under nitrogen atmosphere equipped with a mechanical stirrer, a distilling column and a condenser. 120g of heptane are added to the mixture. The mixture is then heated at 175°C until all azeotrope is distilled. The last volatile alcohols formed during reaction are then removed by applying vacuum. The amine value is 201 mg KOH/g and the viscosity (Haake, 23°C) is 9 dPa.s.

EXAMPLE 12:

200.6 g of 2-(2-aminoethoxy)ethanol and 830 g of polysiloxane resin Silres SY231 (Wacker) are mixed in a reaction vessel under nitrogen atmosphere equipped with a mechanical stirrer, a distilling column and a condenser. 120g of heptane are added to the mixture. The mixture is then heated at 175°C until all azeotrope is distilled. The last volatile alcohols formed during reaction are then removed by applying vacuum. The amine value is 201 mg KOH/g and the viscosity (Haake, 23°C) is 7 dPa.s.

EXAMPLE 13:

369.1 g of 2-(2-aminoethoxy)ethanol and 830 g of polysiloxane resin Silres SY231 (Wacker) are mixed in a

reaction vessel under nitrogen atmosphere equipped with a mechanical stirrer, a distilling column and a condenser. 120g of heptane are added to the mixture. The mixture is then heated at 175°C until all azeotrope is distilled. The last volatile alcohols formed during reaction are then removed by applying vacuum. The amine value is 345 mg KOH/g and the viscosity (Haake, 23°C) is 6 dPa.s.

EXAMPLE 14: Clear Coatings according to the invention

This example describes the preparation of polymers according to the invention comprising amino-functional polysiloxane according to the invention and an epoxy resin. These polymers were formulated as clear films, and the Koenig hardness was measured. The reference example was prepared by mixing an epoxy resin with a commercial aminopolysiloxane bought from Wacker under the name of Silres 44100 VP, having Si-C bonded amine groups and an amine value of 227 mg KOH/g (AHEW 247 g/eq.). The comparative example was prepared by mixing an epoxy resin with Jeffamine T403 (Huntsman).

5 g of Eponex 1510 (Resolution Performance Products) were mixed with the following polysiloxanes at a 1/1 stoichiometry. Drawdawns on glass were performed using a bird applicator BA30.

The Koenig hardness (ISO1522 and DIN53157) is a pendulum-damping test for assessment of the hardness of a coating. A pendulum of particular shape and time of oscillation rests on two balls on the paint film and is set into motion from a certain starting deflection angle (from 6° to 3°). The time in which the pendulum has arrived at a certain final angle is a measurement for the hardness of the paint film. The harder the coated surface, the higher the number of oscillations. The number of oscillations is then converted in seconds.

The Koenig hardness was measured after 1, 2, 5 13 and 21 days at room temperature. The results are shown in Table A.

Table A

| Example | g/5 g epoxy resin | Koenig hardness (s) 1 day | Koenig hardness (s) 2 days | Koenig hardness (s) 5 days | Koenig hardness (s) 13 days | Koenig hardness (s) 21 days |
|---|---|---|---|---|---|---|
| Reference | 5.51 | 90 | 157 | 176 | 203 | 195 |
| Example 1 | 11.81 | 48 | 113 | 138 | 160 | 178 |
| Example5 | 12.92 | 69 | 111 | 120 | 120 | 124 |
| Example2 | 12.92 | 71 | 167 | 200 | 212 | 196 |
| Example8 | 12.92 | not dry | 22 | 110 | 183 | 195 |
| Example4 | 6.27 | not dry | 48 | 133 | 179 | 202 |
| Comparative example | 1.81 | not dry | not dry | not dry | sticky | sticky |
| Example12 | 8.31 | not dry | 11 | 67 | 154 | 195 |

The films comprising amino-functional polysiloxanes according to the present invention exhibit a dried film after one or two days, whereas a film comprising a conventional amine (comparative example) does not dry efficiently. The hardness development obtained can be moderate to very high, depending on the requirements of the paint formulation.

EXAMPLE 15: Coatings

This example describes the preparation of epoxy-polysiloxane coatings according to the invention comprising amino-functional polysiloxane according to the invention as a hardener, a polysiloxane and an epoxy resin. In the coatings tested in this example, a white base epoxy paint (Base) used is shown in Table B. The Base has an Epoxy Equivalent in Weight of (EEW) 835.6 g/eq. The Koenig hardness and the appearance of the coatings were measured. Coating III was prepared by mixing the white Base with a commercial aminopolysiloxane bought from Wacker under the name of Silres 44100 VP, having Si-C bonded amine groups and an amine value of 227 mg KOH/g (AHEW 247 g/eq.) (denoted hereunder as reference).

Table B

| Ingredients Base | Weight in g |
|---|---|
| Hydrogenated bisphenol A epoxy resin | 25 |
| Thixotropic agent | 0.5 |
| Defoamer | 0.65 |
| Pigment, charges | 35.2 |
| Polysiloxane resin, DC 3074 | 35 |
| Catalyst | 2 |
| Solvent | 3 |

Drawdowns were performed with BA 30 on glass panels. The stoichiometric ratio was 100 %. The quantities (in g) and the results are shown Table C.

Table C

| Coatings | I | II | III |
|---|---|---|---|
| Base | 20 | 20 | 20 |
| Example 7 | 14.6 | - | - |
| Example 8 | - | 13.8 | - |
| Reference | - | - | 5.9 |
| | | | |
| Appearance | glossy, smooth, yellowing | glossy, smooth | glossy |
| Gloss [H20/H60/H85] | 84/94/97 | 80/91/96 | 70/91/94 |

Coatings I-III have high gloss. The flow of coatings I-III is very good and the films look very smooth.

Next, the coatings were tested in accelerated weathering according to ASTM G53, in QUV-B: these tests were designed to simulate accelerated weathering conditions caused by sunlight. Test panels are exposed to alternating ultraviolet and humidity cycles. They are checked periodically and degradation is measured by loss of gloss. The results are shown in Figure 1.

From these results, it can be seen that the coating compositions according to the present invention have a better gloss retention and UV resistance than the commercial references.

Next, the hardness development was measured for coatings IV, V, VI (Table D). Drawdowns were performed with BA 30 on glass panels. The stoichiometric ratio was 100 %. The quantities (in g) and the results are shown in Table D, the panels were sprayed at 200-250 mm (wet) and were left to dry for 2 weeks at room temperature.

Table D

| Coatings | Base | Aminopolysiloxane | Xylene | Viscosity, dPa.s | Koenig hardness [sec.] | | |
|---|---|---|---|---|---|---|---|
| | | | | | 4 days | 7 days | 12 days |
| Coating IV | 250 | 111.2 of example 10 | 8 | 9.3 | 73 | 77 | 87 |
| Coating V | 250 | 156.7 of example 9 | / | 8.6 | 52 | 70 | 94 |
| Coating VI | 250 | 156.7 of example 2 | / | 8.2 | 111 | 122 | 127 |
| Reference | 250 | 73.7 | / | 9.0 | 108 | 116 | 126 |

Hardness measurements and gloss retention in QUV accelerated weathering tests clearly show that coatings formed from epoxy-polysiloxane polymer compositions according to the invention have improved gloss retention, weathering resistance with similar to identical hardness development when compared to conventional epoxy-based coating compositions.

EXAMPLE 16: Specific examples of amino-functional polysiloxanes according to the invention are described hereunder in Table 1.

Examples of functional polysiloxane according to the invention may contain units of formula (A) and (B), in an alternating and/or in a random fashion, wherein the hydroxy and/or alkoxy group $-OR^6$ are replaced by 10-100 % of $-O-R^9$, preferably by 20-100 % of $-O-R^9$, most preferably by 30-100 % of $-O-R^9$.

(**A**) 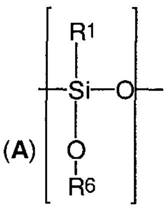 (**B**) 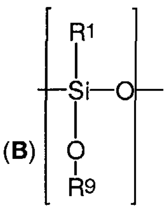

Table 1

| $R^1$ | $R^6$ | $R^9$ |
|---|---|---|
| phenyl and/or $C_{1-8}$alkyl | H | 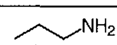 |
| phenyl and/or $C_{1-8}$alkyl | H | 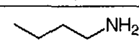 |
| phenyl and/or $C_{1-8}$alkyl | H | 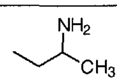 |
| phenyl and/or $C_{1-8}$alkyl | H | 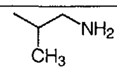 |
| phenyl and/or $C_{1-8}$alkyl | H | 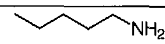 |

| $R^1$ | $R^6$ | $R^9$ |
|---|---|---|
| phenyl and/or $C_{1-8}$alkyl | H | 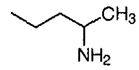 |
| phenyl and/or $C_{1-8}$alkyl | H | 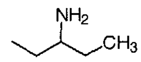 |
| phenyl and/or $C_{1-8}$alkyl | H | 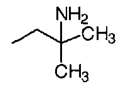 |
| phenyl and/or $C_{1-8}$alkyl | H | 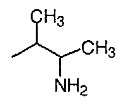 |
| phenyl and/or $C_{1-8}$alkyl | H | 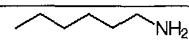 |
| phenyl and/or $C_{1-8}$alkyl | H | 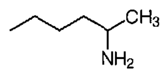 |
| phenyl and/or $C_{1-8}$alkyl | H | 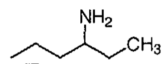 |
| phenyl and/or $C_{1-8}$alkyl | H | 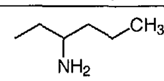 |
| phenyl and/or $C_{1-8}$alkyl | H | 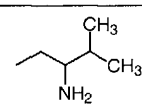 |
| phenyl and/or $C_{1-8}$alkyl | H | 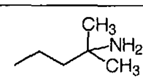 |
| phenyl and/or $C_{1-8}$alkyl | H | 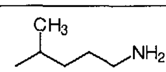 |
| phenyl and/or $C_{1-8}$alkyl | H | 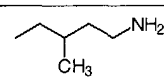 |
| phenyl and/or $C_{1-8}$alkyl | H | 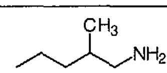 |
| phenyl and/or $C_{1-8}$alkyl | H | 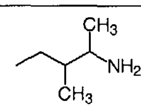 |
| phenyl and/or $C_{1-8}$alkyl | H | 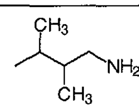 |
| phenyl and/or $C_{1-8}$alkyl | H | 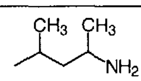 |
| phenyl and/or $C_{1-8}$alkyl | H | 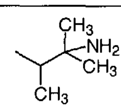 |
| phenyl and/or $C_{1-8}$alkyl | H | 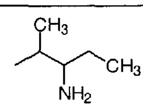 |

| $R^1$ | $R^6$ | $R^9$ |
|---|---|---|
| phenyl and/or $C_{1-8}$alkyl | H | 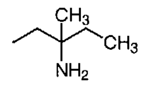 |
| phenyl and/or $C_{1-8}$alkyl | H | 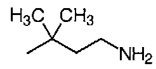 |
| phenyl and/or $C_{1-8}$alkyl | H | 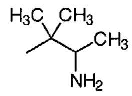 |
| phenyl and/or $C_{1-8}$alkyl | H | 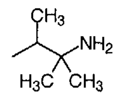 |
| phenyl and/or $C_{1-8}$alkyl | H | 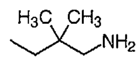 |
| phenyl and/or $C_{1-8}$alkyl | H | 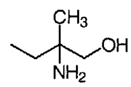 |
| phenyl and/or $C_{1-8}$alkyl | H | 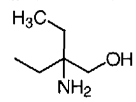 |
| phenyl and/or $C_{1-8}$alkyl | H | 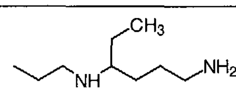 |
| phenyl and/or $C_{1-8}$alkyl | H | 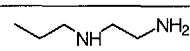 |
| phenyl and/or $C_{1-8}$alkyl | H | 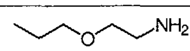 |
| phenyl and/or $C_{1-8}$alkyl | Me | 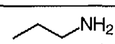 |
| phenyl and/or $C_{1-8}$alkyl | Me | 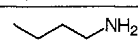 |
| phenyl and/or $C_{1-8}$alkyl | Me | 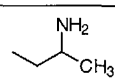 |
| phenyl and/or $C_{1-8}$alkyl | Me | 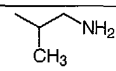 |
| phenyl and/or $C_{1-8}$alkyl | Me | 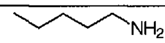 |
| phenyl and/or $C_{1-8}$alkyl | Me | 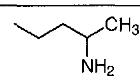 |
| phenyl and/or $C_{1-8}$alkyl | Me | 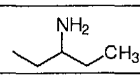 |
| phenyl and/or $C_{1-8}$alkyl | Me | 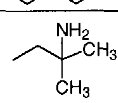 |
| phenyl and/or $C_{1-8}$alkyl | Me | 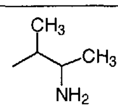 |
| phenyl and/or $C_{1-8}$alkyl | Me | 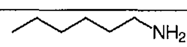 |
| phenyl and/or $C_{1-8}$alkyl | Me | 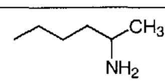 |

| $R^1$ | $R^6$ | $R^9$ |
|---|---|---|
| phenyl and/or $C_{1-8}$alkyl | Me | 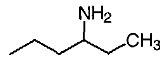 |
| phenyl and/or $C_{1-8}$alkyl | Me | 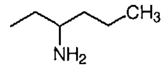 |
| phenyl and/or $C_{1-8}$alkyl | Me | 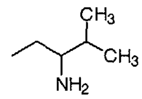 |
| phenyl and/or $C_{1-8}$alkyl | Me | 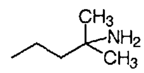 |
| phenyl and/or $C_{1-8}$alkyl | Me | 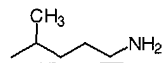 |
| phenyl and/or $C_{1-8}$alkyl | Me | 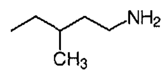 |
| phenyl and/or $C_{1-8}$alkyl | Me | 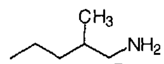 |
| phenyl and/or $C_{1-8}$alkyl | Me | 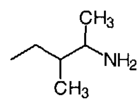 |
| phenyl and/or $C_{1-8}$alkyl | Me | 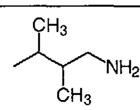 |
| phenyl and/or $C_{1-8}$alkyl | Me | 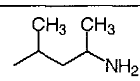 |
| phenyl and/or $C_{1-8}$alkyl | Me | 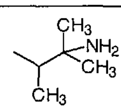 |
| phenyl and/or $C_{1-8}$alkyl | Me | 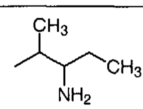 |
| phenyl and/or $C_{1-8}$alkyl | Me | 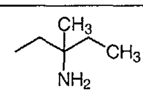 |
| phenyl and/or $C_{1-8}$alkyl | Me | 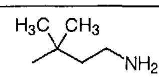 |
| phenyl and/or $C_{1-8}$alkyl | Me | 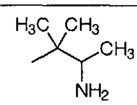 |
| phenyl and/or $C_{1-8}$alkyl | Me | 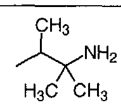 |
| phenyl and/or $C_{1-8}$alkyl | Me | 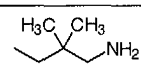 |
| phenyl and/or $C_{1-8}$alkyl | Me | 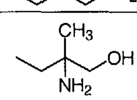 |

| $R^1$ | $R^6$ | $R^9$ |
|---|---|---|
| phenyl and/or $C_{1-8}$alkyl | Me | 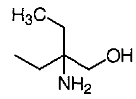 |
| phenyl and/or $C_{1-8}$alkyl | Me | 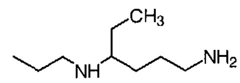 |
| phenyl and/or $C_{1-8}$alkyl | Me | 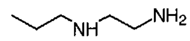 |
| phenyl and/or $C_{1-8}$alkyl | Me | 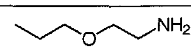 |
| phenyl and/or $C_{1-8}$alkyl | Bu | 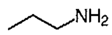 |
| phenyl and/or $C_{1-8}$alkyl | Bu | 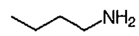 |
| phenyl and/or $C_{1-8}$alkyl | Bu | 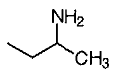 |
| phenyl and/or $C_{1-8}$alkyl | Bu | 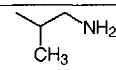 |
| phenyl and/or $C_{1-8}$alkyl | Bu | 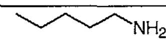 |
| phenyl and/or $C_{1-8}$alkyl | Bu | 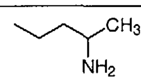 |
| phenyl and/or $C_{1-8}$alkyl | Bu | 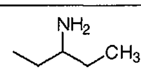 |
| phenyl and/or $C_{1-8}$alkyl | Bu | 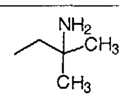 |
| phenyl and/or $C_{1-8}$alkyl | Bu | 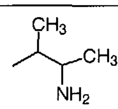 |
| phenyl and/or $C_{1-8}$alkyl | Bu | 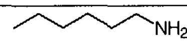 |
| phenyl and/or $C_{1-8}$alkyl | Bu | 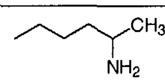 |
| phenyl and/or $C_{1-8}$alkyl | Bu | 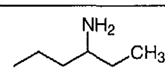 |
| phenyl and/or $C_{1-8}$alkyl | Bu | 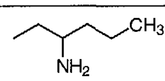 |
| phenyl and/or $C_{1-8}$alkyl | Bu | 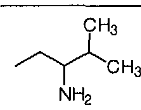 |
| phenyl and/or $C_{1-8}$alkyl | Bu | 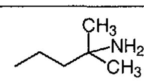 |
| phenyl and/or $C_{1-8}$alkyl | Bu | 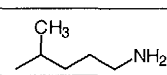 |
| phenyl and/or $C_{1-8}$alkyl | Bu | 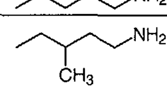 |
| phenyl and/or $C_{1-8}$alkyl | Bu | 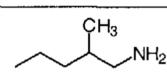 |

| $R^1$ | $R^6$ | $R^9$ |
|---|---|---|
| phenyl and/or $C_{1-8}$alkyl | Bu | 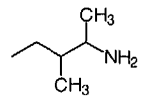 |
| phenyl and/or $C_{1-8}$alkyl | Bu | 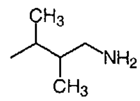 |
| phenyl and/or $C_{1-8}$alkyl | Bu | 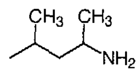 |
| phenyl and/or $C_{1-8}$alkyl | Bu | 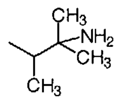 |
| phenyl and/or $C_{1-8}$alkyl | Bu | 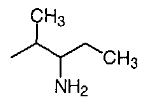 |
| phenyl and/or $C_{1-8}$alkyl | Bu | 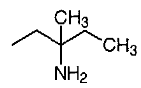 |
| phenyl and/or $C_{1-8}$alkyl | Bu | 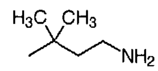 |
| phenyl and/or $C_{1-8}$alkyl | Bu | 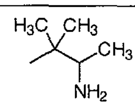 |
| phenyl and/or $C_{1-8}$alkyl | Bu | 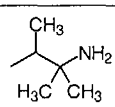 |
| phenyl and/or $C_{1-8}$alkyl | Bu | 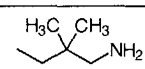 |
| phenyl and/or $C_{1-8}$alkyl | Bu | 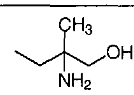 |
| phenyl and/or $C_{1-8}$alkyl | Bu | 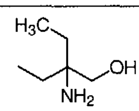 |
| phenyl and/or $C_{1-8}$alkyl | Bu | 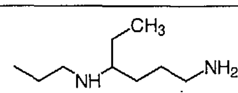 |
| phenyl and/or $C_{1-8}$alkyl | Bu | 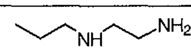 |
| phenyl and/or $C_{1-8}$alkyl | Bu | 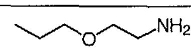 |

Although the amino-functional polysiloxane of the present invention have been described with considerable detail with reference to certain preferred variations thereof, other variations are possible. Therefore, the spirit and scope of the appended claims should not be limited to the preferred variations described herein.

**Claims**

1. Amino-functional polysiloxane of formula (1)

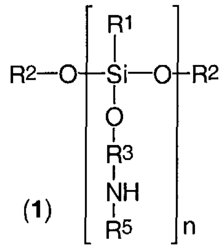

(**1**)

wherein each $R^1$ is independently selected from the group comprising alkyl and aryl radicals, each $R^2$ is independently selected from the group comprising hydrogen, alkyl and aryl radicals, n is selected so that the molecular weight for the functional polysiloxane is in the range of from 400 to 10,000 and $R^3$ is a bivalent radical or -O-$R^3$-NH-$R^5$ is hydroxy or alkoxy, and $R^5$ is selected from the group comprising hydrogen, aminoalkyl, aminoalkenyl, aminoaryl, aminocycloalkyl radical, optionally substituted by alkyl, aryl, cycloalkyl, halogen, hydroxy, alkoxy, thioalkyl, amino, amino derivatives, amido, amidoxy, nitro, cyano, keto, acyl derivatives, acyloxy derivatives, carboxy, ester, ether, esteroxy, heterocycle, alkenyl or alkynyl and wherein 0 to 90 % of -O-$R^3$-NH-$R^5$ is hydroxy or alkoxy.

**2.** Amino-functional polysiloxane of formula (1), having the following stoichiometric formula

$$R^1_a R^2_b (R^9O)_c SiO_{\frac{(4-a-b-c)}{2}},$$

wherein each $R^1$ is independently selected from the group comprising alkyl and aryl radicals, each $R^2$ is independently selected from the group comprising hydrogen, alkyl and aryl radicals, each $R^9$ is independently selected from hydrogen, alkyl, or -$R^3$-NH-$R^5$, a and b are each a real number from 0.0 to 2.0, more in particular from 0.1 to 2.0, c is a real number from 0.1 to 1.0, b/a is ranging from 0.2-2.0 and a+b+c is lower than 4, wherein $R^3$ is a bivalent radical and $R^5$ is selected from the group comprising hydrogen, aminoalkyl, aminoalkenyl, aminoaryl, aminocycloalkyl radical, optionally substituted by alkyl, aryl, cycloalkyl, halogen, hydroxy, alkoxy, thioalkyl, amino, amino derivatives, amido, amidoxy, nitro, cyano, keto, acyl derivatives, acyloxy derivatives, carboxy, ester, ether, esteroxy, heterocycle, alkenyl or alkynyl, wherein 0 to 90 % of -O-$R^9$ is hydroxy or alkoxy.

**3.** Amino-functional polysiloxane according to any of claims 1 or 2, wherein $R^3$ is selected from the group comprising alkylene, alkyleneoxy, alkenylene, arylene, aralkylene, aralkenylene, aminoalkylene, alkyleneoxyaralkyloxyalkylene, $CH_2$-phenyl-$(CH_2)_n$-, -phenyl-$(CH_2)_n$-, -C(=O)-, -C(=S)-, -S$(=O)_2$-, alkylene-C(=O)-, alkylene-C(=S)-, alkylene-S$(=O)_2$-, - $NR^4$-C(=O)-, -$NR^4$-alkylene-C(=O)-, or -$NR^4$-S$(=O)_2$ whereby either the C(=O) group or the S$(=O)_2$ group is attached to the $NR^4$ moiety, optionally substituted by alkyl, aryl, cycloalkyl, halogen, hydroxy, alkoxy, thioalkyl, amino, amino derivatives, amido, amidoxy, nitro, cyano, keto, acyl derivatives, acyloxy derivatives, carboxy, alkylcarboxy, ester, alkylester, ether, esteroxy, sulfonic acid, sulfonyl derivatives, sulfinyl derivatives, heterocycle, alkenyl or alkynyl, wherein $R^4$ is hydrogen, alkyl, alkenyl, aralkyl, cycloalkyl, cycloalkylalkyl, aryl, heterocycle or heterocycloalkyl.

**4.** Amino-functional polysiloxane according to claim 3, wherein $R^3$ is alkylene, alkenylene, arylene, aralkylene, aralkenylene, aminoalkylene, alkyleneoxy, alkyleneoxyaralkyloxyalkylene, $CH_2$-phenyl-$(CH_2)_n$-, -phenyl-$(CH_2)_n$-, optionally substituted by alkyl, aryl, cycloalkyl, hydroxy, alkoxy, thioalkyl, amino, amino derivatives, amido, amidoxy, acyl derivatives, acyloxy derivatives, carboxy, alkylcarboxy, ester, alkylester, ether, esteroxy, heterocycle, alkenyl or alkynyl.

**5.** Amino-functional polysiloxane according to any of claims 1 or 2, wherein the radical -O-$R^3$-NH-$R^5$ is a radical of formula (1'),

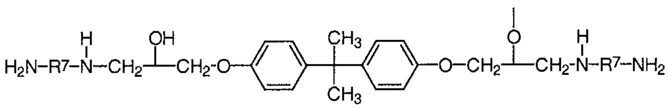

(1')

wherein $R^7$ is selected from the group comprising alkyl, alkenyl, aryl, cycloalkyl radical, optionally substituted by alkyl, aryl, cycloalkyl, halogen, hydroxy, alkoxy, thioalkyl, amino, amino derivatives, amido, amidoxy, nitro, cyano, keto, acyl derivatives, acyloxy derivatives, carboxy, ester, ether, esteroxy, heterocycle, alkenyl or alkynyl.

**6.** Amino-functional polysiloxane according to any of claims 1 to 5 as listed in Table 1.

**7.** Method for the preparation of amino-functional polysiloxane of formula (1) according to any of claims 1 to 6, comprising the step of reacting a polysiloxane of formula (2) with an amino-alcohol of formula (3) comprising at least one hydroxyl and at least one primary amine, optionally in the presence of a suitable catalyst,

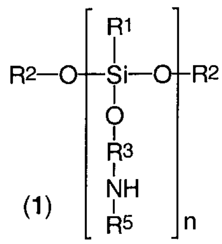

**(1)**

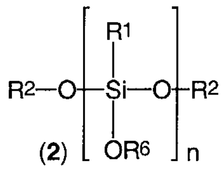

**(2)**

$$HO-R^3-NH-R^5$$

**(3)**

wherein each $R^1$ is independently selected from the group comprising alkyl and aryl radicals, $R^2$ and $R^6$ which may be identical or different, are selected each independently from the group comprising hydrogen, alkyl and aryl radicals, n is selected so that the molecular weight for the functional polysiloxane is in the range of from about 400 to 10,000, $R^3$ is a bivalent radical or $-O-R^3-NH-R^5$ is hydroxy or alkoxy in compound of formula (1), $R^5$ is selected from the group comprising hydrogen, aminoalkyl, aminoalkenyl, aminoaryl, aminocycloalkyl radical, optionally substituted by alkyl, aryl, cycloalkyl, halogen, hydroxy, alkoxy, thioalkyl, amino, amino derivatives, amido, amidoxy, nitro, cyano, keto, acyl derivatives, acyloxy derivatives, carboxy, ester, ether, esteroxy, heterocycle, alkenyl or alkynyl and wherein 0 to 90 % of $-O-R^3-NH-R^5$ is hydroxy or alkoxy.

**8.** Method according to claim 7, wherein the amino-functional polysiloxane of formula (1), has the following stoichiometric formula

$$R^1_a R^2_b (R^9O)_c SiO_{\frac{(4-a-b-c)}{2}},$$

wherein each $R^9$ is independently selected from hydrogen, alkyl, or $-R^3-NH-R^5$, and $R^1$, $R^2$, $R^3$, $R^5$ have the same meaning as that defined above, a and b are each a real number from 0.0 to 2.0, more in particular from 0.1 to 2.0, c is a real number from 0.1 to 1.0, b/a is ranging from 0.2-2.0 and a+b+c is lower than 4, wherein 0 to 90 % of $-O-R^9$ is hydroxy or alkoxy.

**9.** Method according to any of claims 7 or 8, wherein $R^3$ is selected from the group comprising alkylene, alkyleneoxy, alkenylene, arylene, aralkylene, aralkenylene, aminoalkylene, alkyleneoxyaralkyloxyalkylene, $CH_2$-phenyl-$(CH_2)_n$-, -phenyl-$(CH_2)_n$-, -C(=O)-, -C(=S)-, $-S(=O)_2-$, alkylene-C(=O)-, alkylene-C(=S)-, alkylene-$S(=O)_2$-, $-NR^4$-C(=O)-, $-NR^4$-alkylene-C(=O)-, or $-NR^4-S(=O)_2$ whereby either the C(=O) group or the $S(=O)_2$ group is attached to the $NR^4$ moiety, optionally substituted by alkyl, aryl, cycloalkyl, halogen, hydroxy, alkoxy, thioalkyl, amino, amino derivatives, amido, amidoxy, nitro, cyano, keto, acyl derivatives, acyloxy derivatives, carboxy, alkylcarboxy, ester, alkylester, ether, esteroxy, sulfonic acid, sulfonyl derivatives, sulfinyl derivatives, heterocycle, alkenyl or alkynyl, wherein $R^4$ is hydrogen, alkyl, alkenyl, aralkyl, cycloalkyl cycloalkylalkyl, aryl, heterocycle or heterocycloalkyl.

**10.** Method according to claim 9, wherein $R^3$ is alkylene, alkenylene, arylene, aralkylene, aralkenylene, aminoalkylene, alkyleneoxy, alkyleneoxy-aralkyloxyalkylene, $CH_2$-phenyl-$(CH_2)_n$-, -phenyl-$(CH_2)_n$-, optionally substituted by alkyl, aryl, cycloalkyl, hydroxy, alkoxy, thioalkyl, amino, amino derivatives, amido, amidoxy, acyl derivatives, acyloxy derivatives, carboxy, alkylcarboxy, ester, alkylester, ether, esteroxy, heterocycle, alkenyl or alkynyl.

**11.** Method according to any of claims 7 or 8, wherein the radical -O-$R^3$-NH-$R^5$ is a radical of formula (1'),

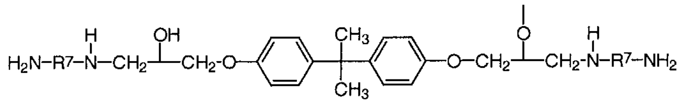

(1')

wherein $R^7$ is selected from the group comprising alkyl, alkenyl, aryl, cycloalkyl radical, optionally substituted by alkyl, aryl, cycloalkyl, halogen, hydroxy, alkoxy, thioalkyl, amino, amino derivatives, amido, amidoxy, nitro, cyano, keto, acyl derivatives, acyloxy derivatives, carboxy, ester, ether, esteroxy, heterocycle, alkenyl or alkynyl.

**12.** Method according to any of claims 7 to 11, wherein the polysiloxane of formula (2) has the following stoichiometric formula

$$R^1_a R^2_b (R^6 O)_c SiO_{\frac{(4-a-b-c)}{2}},$$

wherein $R^1$, $R^2$, $R^6$ have the same meaning as that defined above, a and b are each a real number from 0.0 to 2.0, c is a real number from 0.1 to 1.0, and a+b+c is lower than 4.

**13.** Method according to any of claims 7 to 12, wherein the polysiloxane of formula (2) has a molecular weight ranging from 500 to 6000.

**14.** Method according to any of claims 7 to 13, wherein the polysiloxane of formula (2) has an alkoxy content ranging from 10 to 50 %.

**15.** Method according to any of claims 7 to 14, wherein the polysiloxane of formula (2) is selected from the group comprising alkoxy-functional polysiloxane and silanol-functional polysiloxane.

**16.** Method according to any of claims 7 to 15, wherein the aminoalcohol of formula (3) is selected from the group comprising 2-amino-1-ethanol, 1-amino-2-propanol, 2-amino-1-propanol, 3-amino-1-propanol, 2-amino-1-butanol, neopentanolamine (3-amino-2,2-dimethyl-1-propanol), 2-amino-1-methyl-1-propanol, 2-amino-2-methyl-1-propanol, 2-amino-2-ethylpropane-1,3-diol, 2-amino-2-methylpropane-1,3-diol, 5-amino-1-pentanol, 1.2-dimethylethanolamine, 3-alloxy-2-hydroxy-propylamine, 1-amino-2-methyl-pentanol, hydroxy-ethylmorpholine, N-methylethanolamine, N-hydroxyethylpropanediamine, N-cyclohexylethanolamine, diethylethanolamine, dimethylethanolamine, p-(beta-hydroxyethyl)aniline, N-(beta-hydroxypropyl)-N'-(beta-amino-ethyl)piperazine, 2-hydroxy-3-(m-ethylphenoxy) propylamine, 2-hydroxy-2-phenylethylamine, tris(hydroxymethyl) amino-methane, beta-(beta-hydroxythoxy)ethylamine, 2-aminobenzylalcohol, 3-aminobenzyl alcohol, 4-amino-o-cresol, 2-amino-o-cresol, 1-amino-1-cyclopentane methanol, 2-(2-aminoethoxy)ethanol, 6-amino-1-hexanol, 3-(1-hydroxyethyl)aniline, 2-amino-1-phenylethanol, 1-aminomethyl-1-cyclohexanol, 8-amino-2-naphthol, 2-aminophenethyl alcohol, 4-aminophenethyl alcohol, 3-(alpha-hydroxyethyl) aniline, Mannich bases, the reaction product of an aminoalcohol with cis-2-pentenenitrile, epoxy-amine adducts and mixtures thereof.

**17.** Method according to claim 16, wherein the aminoalcohol of formula (3) is selected from the group comprising 2-amino-1-ethanol, 2-amino-1-butanol, 1-amino-2-propanol, 2-amino-1-propanol, 3-amino-1-propanol, compound of formula (5) and compound of formula (6),

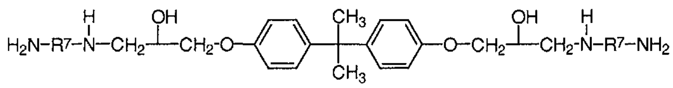

(5)

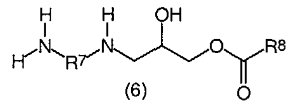

(6)

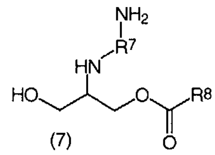

(7)

wherein $R^7$ is selected from the group comprising alkyl, alkenyl, aryl, cycloalkyl radical, optionally substituted by alkyl, aryl, cycloalkyl, halogen, hydroxy, alkoxy, thioalkyl, amino, amino derivatives, amido, amidoxy, nitro, cyano, keto, acyl derivatives, acyloxy derivatives, carboxy, ester, ether, esteroxy, heterocycle, alkenyl or alkynyl and $R^8$ is selected from the group comprising linear or branched aliphatic radicals, preferably branched $C_{1-20}$ alkyl radical.

**18.** Method according to any of claims 7 to 17, wherein the catalyst is titanium (IV) butoxide.

**19.** Use of an amino-functional polysiloxane according to any of claims 1 to 6 as a hardener.

**20.** Use of an amino-functional polysiloxane according to any of claims 1 to 6 in a coating.

**21.** Polymer composition comprising an amino-functional polysiloxane according to any of claims 1 to 6, an epoxy resin, optionally a polysiloxane resin and optionally a catalyst.

**22.** Polymer composition according to claim 21, wherein the amino-functional polysiloxane is ranging from 40 to 80 % by weight and epoxy resin is ranging from 20 to 60 % by weight.

**23.** Method for the preparation of a polymer composition according to any of claims 21 to 22, comprising the step of mixing an amino-functional polysiloxane of any of claims 1 to 5, with an epoxy resin, optionally a polysiloxane resin and optionally a catalyst.

**24.** Epoxy-polysiloxane polymer composition obtainable by combining:

a sufficient amount of an amino-functional polysiloxane of formula (1) according to any of claims 1 to 6 as a hardener with

a polysiloxane of formula (4)

an epoxy resin having more than 1,2 epoxy groups per molecule with an epoxy equivalent weight ranging from 100 to 5000

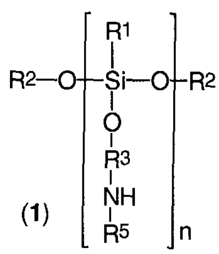

**(1)**

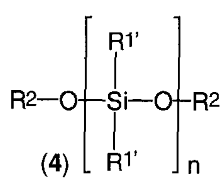

**(4)**

wherein each $R^1$ is independently selected from the group comprising alkyl and aryl radicals, each $R^2$ is independently selected from the group comprising hydrogen, alkyl and aryl radicals, each $R^{1'}$ is independently selected from the group comprising hydroxy, alkyl, aryl, and alkoxy radicals, and n is selected so that the molecular weight for the polysiloxane is in the range of from about 400 to 10,000, $R^3$ is a bivalent radical or -O-$R^3$-NH-$R^5$ is hydroxy or alkoxy, $R^5$ is selected from the group comprising hydrogen, aminoalkyl, aminoalkenyl, aminoaryl, aminocycloalkyl radical, optionally substituted by alkyl, aryl, cycloalkyl, halogen, hydroxy, alkoxy, thioalkyl, amino, amino derivatives, amido, amidoxy, nitro, cyano, keto, acyl derivatives, acyloxy derivatives, carboxy, ester, ether, esteroxy, heterocycle, alkenyl or alkynyl and wherein 0 to 90 % of -O-$R^3$-NH-$R^5$ is hydroxy or alkoxy.

**25.** Epoxy-polysiloxane polymer composition according to claim 24, wherein the amino-functional polysiloxane of formula (1), has the following stoichiometric formula

$$R^1_a R^2_b (R^9O)_c SiO_{\frac{(4-a-b-c)}{2}},$$

wherein each $R^9$ is independently selected from hydrogen, alkyl, or $-R^3$-NH-$R^5$, and $R^1$, $R^2$, $R^3$, $R^5$ have the same meaning as that defined above, a and b are each a real number from 0.0 to 2.0, more in particular from 0.1 to 2.0, c is a real number from 0.1 to 1.0, b/a is ranging from 0.2-2.0 and a+b+c is lower than 4, wherein 0 to 90 % of -O-$R^9$ is hydroxy or alkoxy.

**26.** Epoxy-polysiloxane polymer composition according to any of claims 24 or 25, wherein $R^3$ is selected from the group comprising alkylene, alkyleneoxy, alkenylene, arylene, aralkylene, aralkenylene, aminoalkylene, alkyleneoxyaralkyloxyalkylene, $CH_2$-phenyl-$(CH_2)_n$-, -phenyl-$(CH_2)_n$-, -C(=O) -C(=S)-, $-S(=O)_2$-, alkylene-C(=O)-, alkylene-C(=S)-, alkylene-$S(=O)_2$-, -$NR^4$-C(=O)-, -$NR^4$-alkylene-C(=O)-, or -$NR^4$-$S(=O)_2$ whereby either the C(=O) group or the $S(=O)_2$ group is attached to the $NR^4$ moiety, optionally substituted by alkyl, aryl, cycloalkyl, halogen, hydroxy, alkoxy, thioalkyl, amino, amino derivatives, amido, amidoxy, nitro, cyano, keto, acyl derivatives, acyloxy derivatives, carboxy, alkylcarboxy, ester, alkylester, ether, esteroxy, sulfonic acid, sulfonyl derivatives, sulfinyl derivatives, heterocycle, alkenyl or alkynyl, wherein $R^4$ is hydrogen, alkyl, alkenyl, aralkyl, cycloalkyl, cycloalkylalkyl, aryl, heterocycle or heterocycloalkyl.

**27.** Epoxy-polysiloxane polymer composition according to claim 26, wherein $R^3$ is alkylene, alkenylene, arylene, aralkylene, aralkenylene, aminoalkylene, alkyleneoxy, alkyleneoxyaralkyloxyalkylene, $CH_2$-phenyl-$(CH_2)_n$-, -phenyl-$(CH_2)_n$-, optionally substituted by alkyl, aryl, cycloalkyl, hydroxy, alkoxy, thioalkyl, amino, amino derivatives, amido, amidoxy, acyl derivatives, acyloxy derivatives, carboxy, alkylcarboxy, ester, alkylester, ether, esteroxy, heterocycle, alkenyl or alkynyl.

**28.** Epoxy-polysiloxane polymer composition according to any of claims 24 or 25, wherein the radical -O-$R^3$-NH-$R^5$ is a radical of formula (1'),

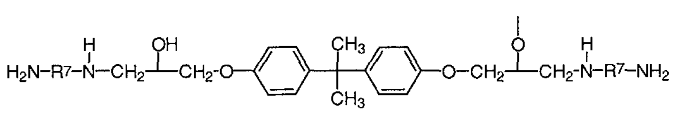

(1')

wherein $R^7$ is selected from the group comprising alkyl, alkenyl, aryl, cycloalkyl radical, optionally substituted by alkyl, aryl, cycloalkyl, halogen, hydroxy, alkoxy, thioalkyl, amino, amino derivatives, amido, amidoxy, nitro, cyano, keto, acyl derivatives, acyloxy derivatives, carboxy, ester, ether, esteroxy, heterocycle, alkenyl or alkynyl.

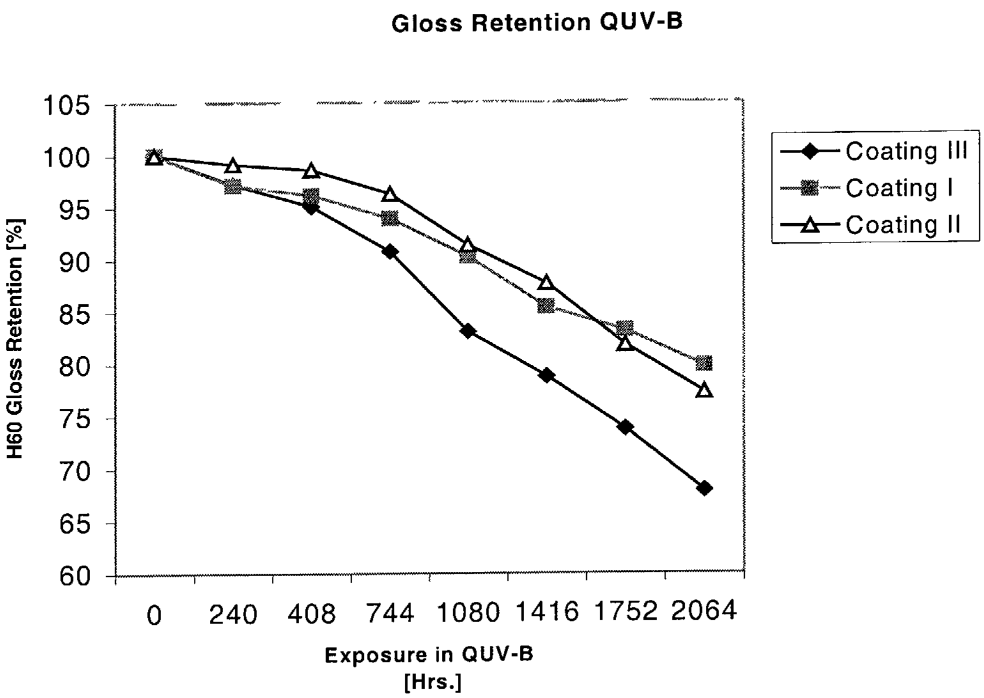
Gloss Retention QUV-B
105
100
95
90
85
80
75
70
65
60
H60 Gloss Retention [%]
0
240
408
744
1080
1416
1752
2064
Exposure in QUV-B
[Hrs.]
Coating III
Coating I
Coating II

**Figure 1**

European Patent Office

# EUROPEAN SEARCH REPORT

Application Number
EP 02 44 7081

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X<br>Y | US 3 941 856 A (CREASEY NORMAN GEOFFREY ET AL) 2 March 1976 (1976-03-02)<br>* column 3, line 7 - line 29 *<br>* column 3, line 46 - line 53 *<br>* column 7, line 15 - line 16 *<br>--- | 1-4,6<br>19-22 | C08G77/388<br>C08G77/26<br>C08L83/08<br>C09D163/00<br>C09D183/08<br>//C08L63/00, 83:08 |
| X<br>Y | EP 0 887 366 A (DOW CORNING)<br>30 December 1998 (1998-12-30)<br>* column 1, line 18 - column 2, line 3 *<br>* column 3, line 16 - line 19 *<br>--- | 1-4, 6-10,12, 13, 15-17,20<br>18,20 | |
| Y | DE 17 20 684 A (BAYER AG)<br>15 July 1971 (1971-07-15)<br>* page 2, paragraph 2 - page 3, paragraph 1 *<br>--- | 18 | |
| X | GB 948 133 A (UNILEVER LTD)<br>29 January 1964 (1964-01-29)<br>* page 2, column 1, line 3 - line 19 *<br>* page 5, column 1, line 17 - line 28; example 1 *<br>--- | 7-10,12, 13,15-17 | TECHNICAL FIELDS SEARCHED (Int.Cl.7)<br>C08G<br>C08L<br>C09D |
| Y | DE 11 25 171 B (SCHERING AG)<br>8 March 1962 (1962-03-08)<br>* column 1, line 33 - column 2, line 31; examples 1-11 *<br>--- | 19,21,22 | |
| Y | DE 12 24 048 B (DOW CORNING)<br>1 September 1966 (1966-09-01)<br>* column 4, line 49 - line 52 *<br>----- | 19 | |

The present search report has been drawn up for all claims

| Place of search | Date of completion of the search | Examiner |
|---|---|---|
| MUNICH | 8 October 2002 | Öhm, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 02 44 7081

This annex lists the patent family members relating to the patent documents cited in the above-mentioned European search report.
The members are as contained in the European Patent Office EDP file on
The European Patent Office is in no way liable for these particulars which are merely given for the purpose of information.

08-10-2002

| Patent document cited in search report | | Publication date | Patent family member(s) | | | Publication date |
|---|---|---|---|---|---|---|
| US 3941856 | A | 02-03-1976 | GB | 1431321 | A | 07-04-1976 |
| | | | BE | 810191 | A4 | 25-07-1974 |
| | | | DE | 2404399 | A1 | 08-08-1974 |
| | | | FR | 2215447 | A2 | 23-08-1974 |
| | | | IE | 38770 | B1 | 24-05-1978 |
| | | | IT | 1054156 | B | 10-11-1981 |
| | | | JP | 50011984 | A | 06-02-1975 |
| | | | NL | 7401260 | A | 01-08-1974 |
| EP 0887366 | A | 30-12-1998 | EP | 0887366 | A2 | 30-12-1998 |
| | | | JP | 11071461 | A | 16-03-1999 |
| | | | TW | 394802 | B | 21-06-2000 |
| | | | US | 5925779 | A | 20-07-1999 |
| DE 1720684 | A | 15-07-1971 | DE | 1720684 | A1 | 15-07-1971 |
| GB 948133 | A | 29-01-1964 | DE | 1443344 | A1 | 28-11-1968 |
| DE 1125171 | B | 08-03-1962 | FR | 1254361 | A | 17-02-1961 |
| | | | BE | 589930 | A | |
| | | | NL | 249876 | A | |
| DE 1224048 | B | 01-09-1966 | NONE | | | |

EPO FORM P0459

For more details about this annex : see Official Journal of the European Patent Office, No. 12/82